# EUROPEAN PATENT SPECIFICATION

(11) **EP 1 816 173 B1**
(45) Date of publication and mention of the grant of the patent: **21.07.2010**
(21) Application number: 07002237.1
(22) Date of filing: 01.02.2007
(51) Int. Cl.: C09D 11/10

(54) **Manufacturing method of nonaqueous pigment dispersion liquid, and ink composition, ink jet recording composition, image forming method and recorded material using the same**
Verfahren zur Herstellung einer nichtwässrigen Pigmentdispersionsflüssigkeit und Tintenzusammensetzung, Tintenstrahlaufzeichnungszusammensetzung, Bilderzeugungsverfahren und aufgezeichnetes Material damit
Procédé de fabrication d'un liquide de dispersion à pigment non aqueux, et composition d'encre, composition d'enregistrement à jet d'encre, procédé de formation d'images et matériel enregistré l'utilisant

(30) Priority: 03.02.2006 JP 2006026950
(43) Date of publication of application: 08.08.2007
(73) Proprietor: FUJIFILM Corporation, Minato-ku Tokyo (JP)
(72) Inventor: Sano, Shojiro, Haibara-gun Shizuoka-ken (JP); Sato, Takehiko, Haibara-gun Shizuoka-ken (JP); Makuta, Toshiyuki, Haibara-gun Shizuoka-ken (JP); Tsujihata, Shigetomo, Haibara-gun Shizuoka-ken (JP)
(74) Representative: HOFFMANN EITLE

(56) References cited:
- EP-A- 1 591 497
- EP-A- 1 621 594
- US-A1- 2005 255 254
- DATABASE WPI Week 200634 Derwent Publications Ltd., London, GB; AN 2006-332522 XP002430175 & WO 2006/046412 A1 (KONICA MINOLTA MEDICAL & GRAPHIC INC) 4 May 2006 (2006-05-04) & WO 2006/046412 A1 (KONICA MINOLTA MEDICAL & GRAPHIC INC) 4 May 2006 (2006-05-04)

## Description

### BACKGROUND OF THE INVENTION

### Field of the Invention

The invention relates to a manufacturing method of a nonaqueous pigment dispersion liquid, an ink composition, and an image forming method and a recorded material using the same. In particular, the invention relates to a manufacturing method for a nonaqueous pigment dispersion liquid, and an ink composition which is obtained by using the nonaqueous pigment dispersion liquid and which is polymerizable and curable after recording, and an image forming method and a recorded material using the same.

### Description of the Related Art

Electrophotographic systems, sublimation-type and melting-type thermal transfer systems, and inkjet systems are image recording methods of forming an image on a recording medium such as paper based on image data signals. In particular, inkjet systems are applicable to an inexpensive apparatus, and perform direct image formation on a recording medium by ejecting ink only to image areas where ink deposition is necessary; therefore, inkjet systems use ink effectively, thus reducing the running cost. Further, inkjet systems generate less noise and are superior image recording systems.

Inkjet systems enable printing on recording media that do not absorb water, such as plastic sheets and metallic plates, as well as on paper. In inkjet systems, it is an important target to achieve higher printing speed and higher printing quality. Therefore, the time liquid droplets take to dry and cure after printing has significant influence on the sharpness of the image.

In one inkjet system, an inkjet recording ink that can be cured by irradiation with active energy ray is used. According to this system, sharp images can be formed by curing ink droplets by irradiation with active energy ray just after printing.

In order to form highly accurate images with excellent coloring properties, such a curable ink composition is required to have high colorant, especially pigment, dispersibility and stability over time. Reduction in the colorant size is necessary for imparting clear tone and high tinting strength to the ink composition. In particular, ejected droplets of the inkjet ink exert a significant influence on the sharpness of images; therefore, the ejection quantity of the ink droplets needs to be small and the size of the colorant particles contained in the ink has to be smaller than the thickness of the film formed by curing of the ink. However, when the size of the pigment particles is reduced so as to achieve higher tinting strength, the fine particles are hard to disperse, thus easily forming aggregates. Another problem is created in that the viscosity of the ink composition is increased by the addition of a dispersant. The formation of the colorant aggregates and the increase in the viscosity of the ink composition both adversely affect the ink ejection property, and such an ink composition is not preferred.

When an ink composition is used in inkjet recording, the ink composition is contained in a cartridge. The ink composition in the cartridge is heated at ejection and cooled at a non-ejection time or at storage; in this way, the ink composition undergoes repeated temperature changes (heating-cooling). This temperature changes also adversely affect the colorant dispersibility, and the colorant dispersibility is deteriorated with time, whereby problems are created in that thickening and aggregation easily occurs.

Accordingly, there is a demand for an ink composition having sufficient fluidity and excellent stability of the colorant dispersion over time, in which fine colorant particles are dispersed stably. Various proposals have been made concerning dispersants for achieving stable colorant dispersion liquids.

For example, a method in which a pigment dispersion liquid, obtained by mixing a pigment and a dispersant in an aqueous medium, is dispersed finely by using microbeads having a diameter of 0.02 to 0.2 mm has been proposed (see, for example, Japanese Patent Application Laid-Open (JP-A) No. 2005-240027).

However, since an aqueous dispersion is used in this method, it can only be applied in aqueous ink, applicable recording media are limited to permeable media such as paper, and it is not sufficient for industrial ink.

Further, a photocurable IJ ink containing a dye (pigment) and a polymerizable monomer has been proposed (see, for example, JP-A No. 5-214280).

However, this ink is problematic in that the particle size of the pigment of the pigment dispersion liquid is large, the filtering property and stability over time of the pigment dispersion liquid are poor, a printed material has high haze, and productivity is low.

### SUMMARY OF THE INVENTION

It is an object of the invention to provide a manufacturing method of a pigment dispersion liquid high in productivity and excellent in dispersibility. It is also an object to provide an ink composition excellent in filtering property and ejecting performance, and low in haze, by using a pigment dispersion liquid manufactured by the manufacturing method.

It is also an object of the invention to provide an image forming method using the ink composition excellent in ejecting performance, and a recorded material which is obtained by forming an image by using the ink composition and has favorably low haze.

In the light of the above-described background, the inventors have intensively researched to attain the problem, and completed the invention.

The invention is achieved by the following means.
[1] A manufacturing method for a nonaqueous pigment dispersion liquid, the nonaqueous pigment dispersion liquid containing at least a pigment, a dispersant, and a polymerizable compound, the method comprising finely dispersing the nonaqueous pigment dispersion liquid using beads having a diameter of from 0.01 mm to less than 0.3 mm,
   wherein the dispersant is a polymer containing a repeating unit selected from the units M-1 to M-16 as defined below.
[2] The manufacturing method for a nonaqueous pigment dispersion liquid as described in [1], wherein the polymerizable compound contains at least one of a monofunctional (meth)acrylate and a difunctional (meth)acrylate.
[3] The manufacturing method for a nonaqueous pigment dispersion liquid as described in [1] or [2], wherein the polymerizable compound contains at least one of a compound containing an oxethane group and a compound containing an oxirane group.
[4] An ink composition comprising a nonaqueous pigment dispersion liquid manufactured by the manufacturing method as described in any one of [1] to [3], a polymerizable compound, and a photopolymerization initiator.
[5] An inkjet recording composition comprising the ink composition as described in [4].
[6] An image forming method comprising forming an image by inkjet recording, the inkjet recording comprising ejecting the ink composition as described in [4] or the inkjet recording composition as described in [5].
[7] An image forming method comprising:
   forming an image on a recording material using the ink composition as described in [4] or the inkjet recording composition as described in [5], and
   curing the image formed on the recording material by irradiation with an active energy ray.
[8] The image forming method as described in [7], wherein a light emitting diode is used as a light source for the irradiation with the active energy ray.
[9] The image forming method as described in [7] or [8], wherein the central wavelength of the active energy ray is 365 ± 20 nm.
[10] The image forming method as described in any one of [7] to [9], wherein a thickness of the cured image is 2 to 30 µm.
[11] A recorded material obtained by forming an image using the ink composition as described in [4] or the inkjet recording composition as described in [5].

According to the present invention, it is possible to provide a manufacturing method of a pigment dispersion liquid high in productivity and excellent in dispersibility. By using a pigment dispersion liquid manufactured by the manufacturing method, it is also possible to provide an ink composition excellent in filtering property and ejecting property, and low in haze.

According to the present invention, it is also possible to provide an image forming method using the ink composition excellent in ejecting property, and a recorded material which is obtained by forming an image by using the ink composition and which has favorably low haze.

### BRIEF DESCRIPTION OF THE DRAWING

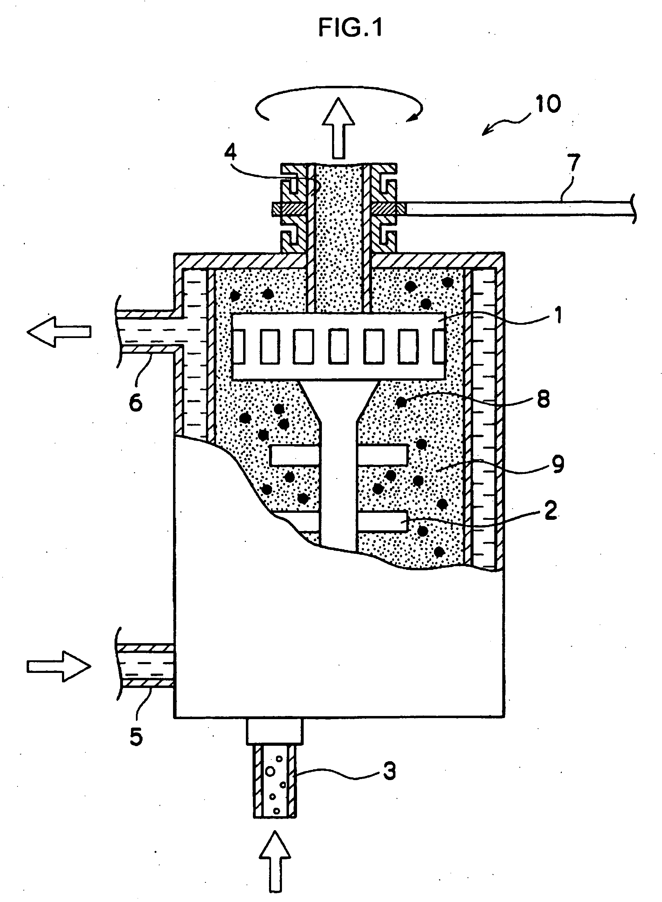

Fig. 1 is a schematic diagram showing an example of a beads mill dispersion machine employing a separation method using centrifugal force.

### DETAILED DESCRIPTION OF THE INVENTION

The manufacturing method of a nonaqueous pigment dispersion liquid of the invention (hereinafter, also referred to as the manufacturing method of the invention) is a method for manufacturing a dispersion liquid containing at least a pigment, a dispersant, and a polymerizable compound, and the method includes dispersing finely using beads having a diameter of 0.01 mm or more and less than 0.3 mm.

In the manufacturing method of a pigment dispersion liquid, by dispersing finely in a nonaqueous system using beads with a specified range of particle size, a nonaqueous pigment dispersion liquid high in productivity and excellent in dispersibility can be obtained.

The manufacturing method of a nonaqueous pigment dispersion liquid of the invention, and components of the nonaqueous pigment dispersion liquid are described in detail below.

### Manufacturing method of nonaqueous pigment dispersion liquid

In the manufacturing method of the invention, the nonaqueous pigment dispersion liquid contains at least a pigment, a dispersant, and a polymerizable compound and is dispersed in a nonaqueous system. Other additives may be added, as necessary.

In this specification, the nonaqueous system is a system that does not contain moisture substantially, and the system that does not contain moisture substantially is a system of which moisture content is 2.0% or less.

The manufacturing method of the invention includes dispersing at least three materials, i.e. a pigment, a dispersant, and a polymerizable compound, finely using beads (dispersion medium).

A dispersion machine for dispersing by using beads may be, for example, an ultravisco mill, an agitator mill, a super-apex mill, an ultra-apex mill, a dynomill, a fine mill, an annular gap mill, or the like, and these may be used preferably.

A method separating beads may be, for example, a centrifugal separation method, a screen method, or a slit method. The centrifugal separation method is preferred when using beads of 0.1 mm or less.

Among the dispersion machines, the beads mill employing the beads centrifugal separation method is particularly preferred (ULTRA-APEX MILL UAM, manufactured by KOTOBUKI INDUSTRIES CO., LTD.).

The beads mill is preferred to have a mechanism of separating the dispersion liquids and the beads by using a separation method utilizing centrifugal force, from the viewpoint of beads clogging and biting.

The manufacturing method of a nonaqueous pigment dispersion liquid of the invention is specifically described below by referring to an example in which the beads mill dispersion machine using the separation method using centrifugal force (ULTRA-APEX MILL UAM, manufactured by KOTOBUKI INDUSTRIES CO., LTD.) is used.

Fig. 1 is a block diagram of the beads mill dispersion machine (ULTRA-APEX MILL UAM) using the separation method using centrifugal force.

The beads mill dispersion machine 10 includes a rotating centrifugal separator 1, a rotary pin 2, a belt 7 connected to a motor (not shown) for rotating the centrifugal separator 1, a material inlet 3, and a product outlet 4. Reference numeral 5 denotes a cooling water inlet, and 6 denotes a cooling water outlet. Fig. 1 shows that beads 8 and material slurry 9 are already contained in the machine.

Referring to Fig. 1, the mechanism for dispersing finely is explained on the basis of the flow of liquid containing the pigment and the like.

First, fine beads 4 contained in the machine are stirred by the rotary pin 1, and the material slurry 9 (preliminarily dispersed material mixture liquid containing a dispersed pigment, a dispersant, and a polymerizable compound) is charged into the material inlet 3 in the lower part of the dispersion machine.

The material slurry 9 contacts with the beads 8 vigorously moving in the machine and is dispersed. When the slurry reaches the upper part of the dispersion machine 10, the product slurry 9 and the beads 8 are separated by the centrifugal separator 1, and the beads 8 stay in the machine, while only the product slurry 9 is discharged from the machine through a hollow shaft.

When the beads 8 and the material slurry 9 are charged into the centrifugal separator 1, the beads 8 that have a larger specific gravity are moved to the outer periphery by centrifugal force, while the material slurry 9 that has a smaller specific gravity is moved in the central direction, and gets into the hollow shaft. That is, reaching the upper part of the beads mill 10, the beads 8 and material slurry 9 are centrifugally separated by the centrifugal separator 1, and only the product slurry 9 is discharged from the product slurry outlet 4.

Examples of dispersion media (beads) include glass beads, alumina beads, zirconia silicate beads, and zirconia beads. In particular, zirconia beads are preferred from the viewpoint of prevention of incorporation of impurities.

The diameter (average) of dispersion media (beads) is required to be defined in a range of 0.01 mm or more and less than 0.3 mm from the viewpoint of filtering property and stability over time of the obtained dispersion liquid, and is more preferably 0.02 mm to 0.1 mm, and particularly preferably 0.03 to 0.05 mm.

The diameter (average) of beads should be defined in a range of 0.01 mm or more and less than 0.3 mm. If it is less than 0.01 mm, beads cannot be separated, or if it is more than 0.3 mm, the desired particle size of pigment cannot be achieved.

By defining the diameter (average) of beads in a range of 0.02 to 0.1 mm, the filtering time of the pigment dispersion liquid can be further shortened, and thus the productivity is enhanced.

The beads particle size (beads diameter) is determined by measuring 100 beads by using a vernier caliper, and calculating the average.

The beads filling rate in the beads dispersion machine is not particularly specified, but is generally 40 to 90%, and preferably 60 to 80% from the viewpoint of viscosity of the dispersion liquid and particle size.

The dispersion time is generally 10 to 1440 minutes at a peripheral speed of 3 to 40 m/s, and from the viewpoint of viscosity of the dispersion liquid and particle size, preferably 30 to 720 minutes at a peripheral speed of 5 to 20 m/s, and more preferably 60 to 240 minutes at a peripheral speed of 9 to 13 m/s.

The liquid temperature during dispersion is not particularly specified, but from the viewpoint of viscosity of the dispersion liquid, preferably 20 to 60°C, more preferably 28 to 50°C, and particularly preferably 34 to 42°C.

It is preferred to mix the three materials preliminarily before fine dispersion in order to perform the subsequent fine dispersion process more efficiently.

The average particle size in the finely dispersed liquid is preferably 50 to 90 nm, more preferably 55 to 85 nm, and particularly preferably 60 to 80 nm, from the viewpoint of transparency and light fastness of printed material.

If the average particle size in the finely dispersed liquid is smaller than 50 nm, light fastness may be insufficient, or if it exceeds 90 nm, the transparency may be insufficient, and a satisfactory full color image may not be obtained.

The average particle size of pigment particles in the obtained pigment dispersion liquid is determined by measuring the major axis diameter of 100 pigment particles by using a transmission electron microscope (TEM), and calculating the average. This value can be used in the invention.

### Pigment

A pigment that can be preferably used in the invention is described.

The pigment is not particularly specified, and any commercial products such as an organic pigment, an inorganic pigment, a pigment dispersed in a dispersion medium such as an insoluble resin or the like, a pigment having a resin grafted on the surface. Resin particles stained by a dye can be also used.

Examples of these pigments include the pigments described, for example, in Seijiro Itoh, "Dictionary of Pigments" (2000), W. Herbst and K. Hunger, "Industrial Organic Pigments", and JP-A Nos. 2002-12607, 2002-188025, 2003-26978, and 2003-342503.

Specific examples of the organic and inorganic pigments for use in the invention include the following. Examples of pigments of yellow color include: monoazo pigments such as C.I. Pigment Yellow 1 (Fast Yellow G, etc.) and C.I. Pigment Yellow 74; disazo pigments such as C.I. Pigment Yellow 12 (Disazo Yellow AAA, etc.) and C.I. Pigment Yellow 17; non-benzidine azo pigments such as C.I. Pigment Yellow 180; azolake pigments such as C.I. Pigment Yellow 100 (tartrazine yellow lake, etc.); condensation azo pigments such as C.I. Pigment Yellow 128, C.I. Pigment Yellow 93 and C.I. Pigment Yellow 95 (Condensation Azo Yellow GR, etc.); acidic-dye lake pigments such as C.I. Pigment Yellow 115 (quinoline yellow lake, etc.); basic-dye lake pigments such as C.I. Pigment Yellow 18 (thioflavin lake, etc.); anthraquinone pigments such as fravantrone yellow (Y-24); isoindolinone pigments such as isoindolinone yellow 3RLT (Y-110); quinophtharone pigments such as quinophtharone yellow (Y-138); isoindoline pigments such as isoindoline yellow (Y-139); nitroso pigments such as C.I. Pigment Yellow 153 (nickel nitroso yellow, etc.); and metal-complex-salt azomethine pigments such as C.I. Pigment Yellow 117 (copper azomethine yellow, etc.).

Examples of red or magenta pigments include: monoazo pigments such as C.I. Pigment Red 3 (toluidine red, etc.); disazo pigments such as C.I. Pigment Red 38 (Pyrazolone Red B, etc.); azolake pigments such as C.I. Pigment Red 53:1 (Lake Red C, etc.) and C.I. Pigment Red 57:1 (Brilliant Carmine 6B); condensation azo pigments such as C.I. Pigment Red 144 (Condensation Azo Red BR, etc.); acidic dye lake pigments such as C.I. Pigment Red 174 (Phloxine B Lake, etc.); basic dye lake pigments such as C.I. Pigment Red 81 (Rhodamine 6G' Lake, etc.); anthraquinone pigments such as C.I. Pigment Red 177 (dianthraquinolyl red, etc.); thioindigo pigments such as C.I. Pigment Red 88 (Thioindigo Bordeaux, etc.); perynone pigments such as C.I. Pigment Red 194 (perynone red, etc.); perylene pigments such as C.I. Pigment Red 149 (perylene scarlet, etc.); quinacridone pigments such as C.I. Pigment Violet 19 (unsubstituted quinacridone) and C.I. Pigment Red 122 (quinacridone magenta, etc.); isoindolinone pigments such as C.I. Pigment Red 180 (Isoindolinone Red 2BLT, etc.); and alizarin lake pigments such as C.I. Pigment Red 83 (madder lake, etc.).

Examples of blue or cyan pigments include disazo pigments such as C.I. Pigment Blue 25 (dianisidine blue, etc.); phthalocyanine pigments such as C.I. pigment blue 15 (phthalocyanine blue, etc.); acidic dye lake pigments such as C.I. pigment blue 24 (peacock blue lake, etc.); basic dye lake pigments such as C.I. Pigment Blue 1 (Victoria Pure Blue BO Lake, etc.); anthraquinone pigments such as C.I. pigment blue 60 (indanthron blue, etc.); and alkali blue pigments such as C.I. Pigment Blue 18 (alkali blue V-5:1).

Examples of green pigments include phthalocyanine pigments such as C.I. Pigment Green 7 (phthalocyanine green) and C.I. Pigment Green 36 (phthalocyanine green); and azo metal complex pigments such as C.I. Pigment Green 8 (nitroso green).

Examples of orange pigments include isoindoline pigments such as C.I. Pigment Orange 66 (isoindoline orange); and anthraquinone pigments such as C.I. Pigment Orange 51 (dichloropyranthron orange).

Examples of black pigments include carbon black, titanium black, and aniline black.

Specific examples of white pigments include basic lead carbonate (2PbCO₃Pb(OH)₂, so-called silver white), zinc oxide (ZnO, so-called zinc white), titanium oxide (TiO₂, so-called titanium white), and strontium titanate (SrTiO₃, so-called titanium strontium white).

Since titanium oxide has a lower specific gravity and a higher refractive index than other white pigments and is more stable chemically or physically, titanium oxide has a greater masking and coloring potential as a pigment, and is further excellent in resistance to acid or alkali and other environmental factors. Thus, the use of titanium oxide as a white pigment is preferable. Of course, other white pigment (including white pigments other than those described above) may be used as necessary.

The volume-average particle size (primary particle size) of the pigment particles is preferred to be 0.03 to 0.12 µm, more preferably 0.04 to 0.09 µm, and particularly preferably 0.05 to 0.08 µm.

By controlling the particle size, the pigment dispersion liquid can be prepared efficiently. When the pigment dispersion liquid is used in an ink composition, clogging of a head nozzle can be suppressed, and ink storage stability, ink transparency, and curing sensitivity can be maintained.

The pigment is contained in the pigment dispersion liquid preferably in an amount of 10 to 40 mass % relative to the total mass of pigment dispersion liquid from the viewpoint of viscosity of pigment disperse solution, and more preferably 15 to 30 mass % relative to the total mass of pigment dispersion liquid.

### Dispersant

The dispersant of the invention is a polymer having a repeating unit as defined below. By using the polymer compound having a specific repeating unit, dispersion can be further stabilized by steric repulsive effect between a pigment and a polymer chain.

The units are shown below.

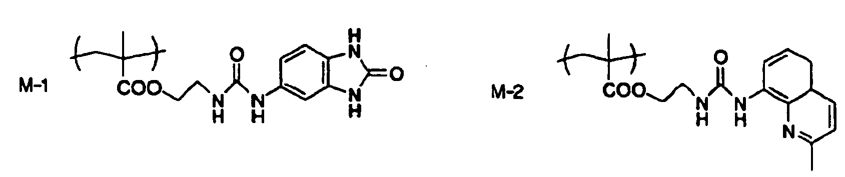

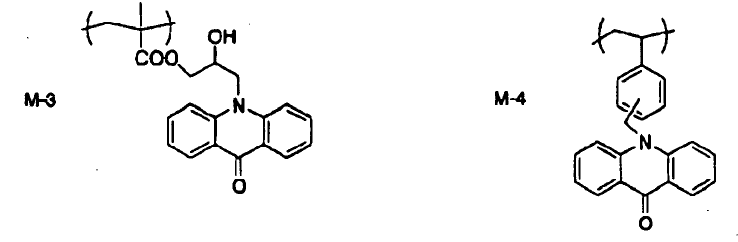

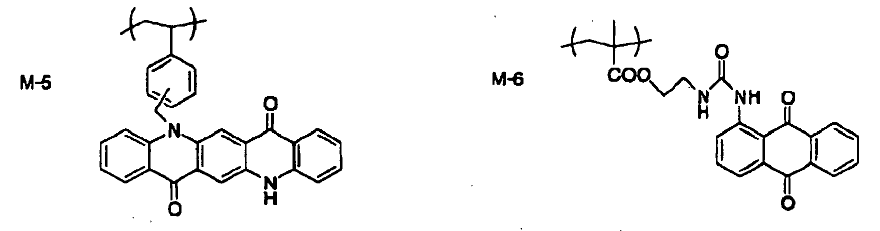

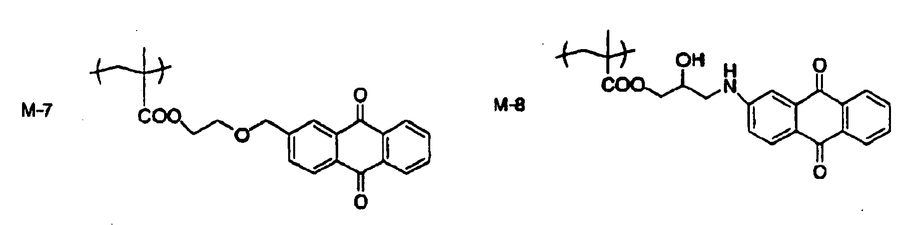

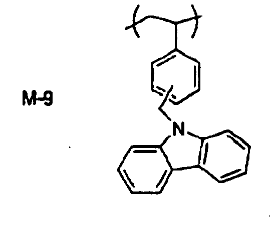

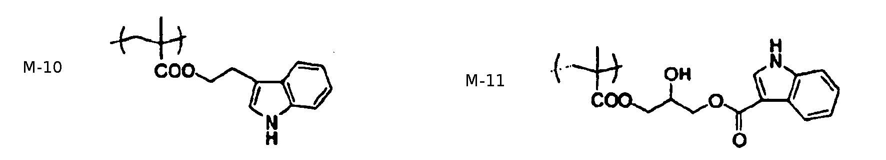

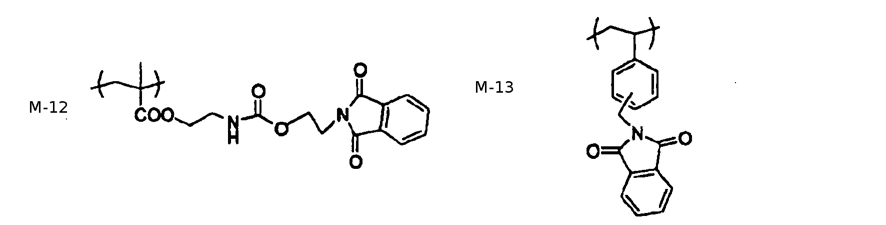

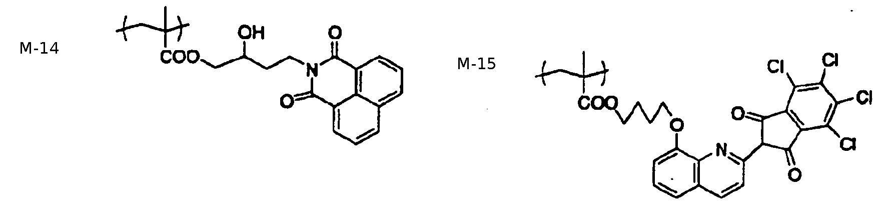

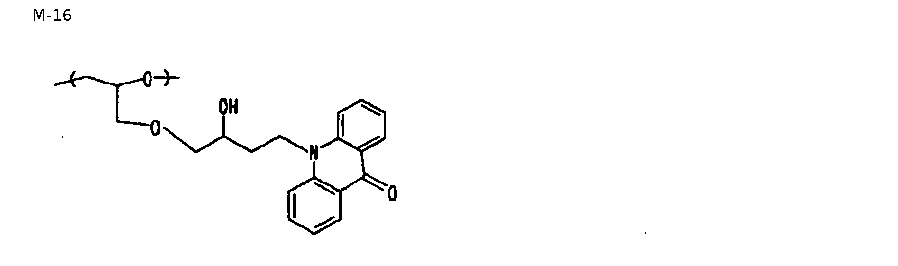

The dispersant of the invention is particularly preferred to be a graft copolymer containing, as copolymerization unit a, polymerizable oligomer having an ethylenically unsaturated double bond at a terminal.

Such a polymerizable oligomer having an ethylenically unsaturated double bond at a terminal is a compound having a specified molecular weight, and is hence called a macromonomer.

The polymerizable oligomer according to the invention contains a polymer chain moiety and a polymerizable functional group moiety at a terminal of the polymer chain. The polymerizable functional group moiety has an ethylenically unsaturated double bond. From the viewpoint of obtaining the desired graft polymer, the group having an ethylenically unsaturated double bond is preferably present at only one of the terminals of the polymer chain.

The group having an ethylenically unsaturated double bond is preferably a (meth)acryloyl group or a vinyl group, particularly preferably a (meth)acryloyl group.

The polystyrene-equivalent number-average molecular weight (Mn) of the macromonomer is preferably in the range of 1000 to 10000, more preferably in the range of 2000 to 9000.

The polymer chain moiety is generally a homopolymer or copolymer of at least one monomer selected from alkyl (meth)acrylates, styrene and derivatives thereof, acrylonitrile, vinyl acetate, and butadiene; polyethylene oxide; polypropylene oxide; or polycaprolactone.

The polymerizable oligomer is preferably an oligomer represented by the following formula (2):

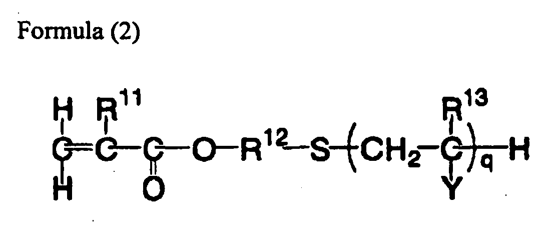

In formula (2), R¹¹ and R¹³ each independently represent a hydrogen atom or a methyl group; R¹² represents a C1 to C12 alkylene group (which may have a substituent (e.g., a hydroxyl group), and may have an ester bond, an ether bond, an amide bond, or the like in the alkylene chain; R¹² is preferably a C2 to C4 alkylene group). Y represents a phenyl group or -COOR¹⁴. The phenyl group may have a substituent and the substituent of the phenyl group may be, for example, a C1 to C4 alkyl group (e.g., methyl, ethyl). R¹⁴ represents a C1 to C10 alkyl group (e.g., methyl, ethyl, benzyl), or a phenyl group. Y is preferably an unsubstituted phenyl group or -COOR¹⁴ in which R¹⁴ represents a C1 to C4 alkyl group. q represents 20 to 200, preferably 25 to 150, and more preferably 30 to 100.

Preferable examples of the polymerizable oligomer (macromonomer) include a polymer in which a (meth)acryloyl group is bound to one terminal of polystyrene, polymethyl (meth)acrylate, poly-n-butyl (meth)acrylate, or poly-i-butyl (meth)acrylate. Examples of commercially available polymerizable oligomers include a polystyrene oligomer having a methacryloyl group at one terminal (Mn = 6000, trade name: AS-6, manufactured by Toagosei Co., Ltd.), a polymethyl methacrylate oligomer having a methacryloyl group at one terminal (Mn = 6000, trade name: AA-6, manufactured by Toagosei Co., Ltd.), and a poly-n-butylacrylate oligomer having a methacryloyl group at one terminal (Mn = 6000, trade name: AB-6, manufactured by Toagosei Co., Ltd.).

Examples of the preferable polymerizable oligomer are not limited to the polymerizable oligomer represented by formula (2), but also include a polymerizable oligomer represented by the following formula (3), and they may be selected appropriately depending on the polymerizable compound to be used.

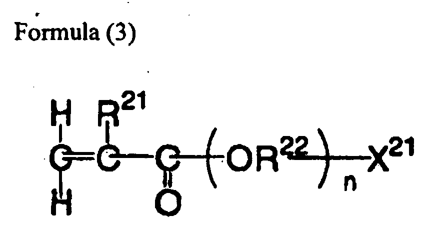

In formula (3), R²¹ represents a hydrogen atom or a methyl group, and R²² represents an alkylene group having 1 to 8 carbon atoms. X²¹ represents -OR²³ or -OCOR²⁴. Herein, R²³ and R²⁴ each independently represent a hydrogen atom, an alkyl group, or an aryl group. n represents 2 to 200.

In formula (3), R²¹ represents a hydrogen atom or a methyl group, and methyl group is preferred.

R²² represents an alkylene group having 1 to 8 carbon atoms, preferably an alkylene group having 1 to 6 carbon atoms, and more preferably an alkylene group having 2 to 3 carbon atoms.

X²¹ represents -OR²³ or -OCOR²⁴. Herein, R²³ represents a hydrogen atom, an alkyl group having 1 to 18 carbon atoms, a phenyl group, or a phenyl group substituted by an alkyl group having 1 to 18 carbon atoms. R²⁴ represents an alkyl group having 1 to 18 carbon atoms, preferably an alkyl group having 1 to 8 carbon atoms. n is 2 to 200, preferably 5 to 100, and more preferably 10 to 100.

Examples of the polymerizable oligomer represented by formula (3) include polyethylene glycol mono(meth)acrylate, polypropylene glycol mono(meth)acrylate, polyethylene glycol polypropylene glycol mono(meth)acrylate, and polytetramethylene glycol monomethacrylate, and they may be commercial products or synthesized products.

As mentioned above, commercial products may be used as the polymerizable monomer represented by formula (3) of the invention, and examples of commercial products include methoxy polyethylene glycol methacrylate (trade names: NK ESTER M-40G, M-90G, M-230G, all manufactured by TOAGOSEI CO., LTD.; trade names: BREMMER PME-100, PME-200, PME-400, PME-1000, PME-2000, PME-4000, all manufactured by NOF CORPORATION), polyethylene glycol monomethacrylate (trade names: BREMMER PE-90, PE-200, PE-350, all manufactured by NOF CORPORATION), polypropylene glycol monomethacrylate (trade names: BREMMER PP-500, PP-800, PP-1000, all manufactured by NOF CORPORATION), polyethylene glycol polypropylene glycol monomethacrylate (trade name: BREMMER 70PEP-370B, manufactured by NOF CORPORATION), polyethylene glycol polytetramethylene glycol monomethacrylate (trade name: BREMMER 55PET-800, manufactured by NOF CORPORATION), and polypropylene glycol polytetramethylene glycol monomethacrylate (trade name: BREMMER NHK-5050, manufactured by NOF CORPORATION).

The dispersant used in the invention is particularly preferred to be a copolymer with a monomer containing a nitrogen atom, since the polymer having a basic group may readily induce interaction with an acidic pigment by acid-base reaction.

### Monomer containing α nitrogen atom

The monomer having a nitrogen-containing group and an ethylenically unsaturated double bond that is a preferred polymerization component for the dispersant of the invention is preferably a monomer represented by the following formula (4).

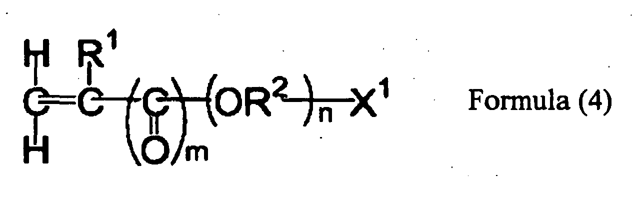

In formula (4), R¹ represents a hydrogen atom or a methyl group; R² represents a C1 to C12 alkylene group; X¹ represents -N(R³)(R⁴), -R⁵-N(R⁶)(R⁷), or a basic nitrogen-containing heterocyclic group; R³, R⁴, R⁶ and R⁷ each independently represent a hydrogen atom, a C1 to C18 alkyl group, or a C6 to C 18 aryl group; R⁵ represents a C1 to C12 alkylene group; and m and n each independently represent 1 or 0.

In formula (4), R² represents a C1 to C12 alkylene group, preferably a C1 to C6 alkylene group, more preferably a C2 to C3 alkylene group. X¹ is -N(R³)(R⁴), -R⁵-N(R⁶)(R⁷), or a basic nitrogen-containing heterocyclic group.

R³, R⁴, R⁶ and R⁷ each independently represent a hydrogen atom, a C1 to C18 alkyl group, or a C6 to C 18 aryl group. The alkyl group is preferably a C 1 to C12 alkyl group, particularly preferably a C1 to C6 alkyl group. The aryl group is preferably a C6 to C12 aryl group, particularly preferably a C6 to C10 aryl group.

R⁵ represents a C1 to C12 alkylene group, preferably a C1 to C6 alkylene group, particularly preferably a C2 to C3 alkylene group.

The basic nitrogen-containing heterocyclic group of X¹ is preferably a pyridyl group (particularly 1-pyridyl group, 2-pyridyl group), a piperidino group (1-piperidino group), a pyrrolidyl group (particularly, 2-pyrrolidyl group), a pyrrolidino group, an imidazolino group, or a morpholino group (4-morpholino group), particularly preferably a pyridyl group or an imidazolino group.

The monomer represented by formula (4) is particularly preferably a compound represented by any one of the following formulae (4-2) to (4-4):

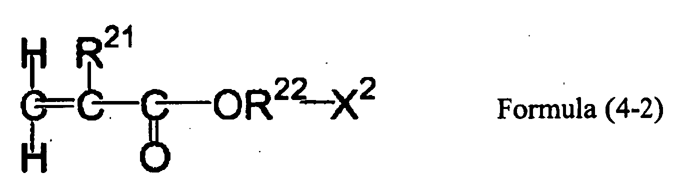

In formula (4-2), R²¹, R²² and X² have the same definitions as those of R¹, R² and X¹ in formula (4), respectively.

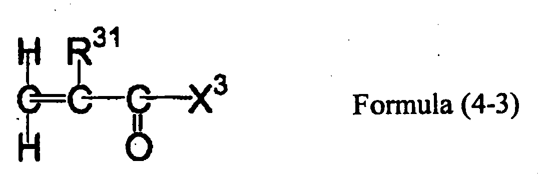

In formula (4-3), R³¹ has the same definition as that of R¹ in formula (4), and X³ has the same definition as that of X¹. X³ is preferably -N(R³³)(R³⁴) in which R³³ and R³⁴ have the same definitions as those of R³ and R⁴ respectively, or is preferably -R³5-N(R³⁶)(R³⁷) in which R³⁵, R³⁶ and R³⁷ have the same definitions as those of R⁵, R⁶ and R⁷ respectively.

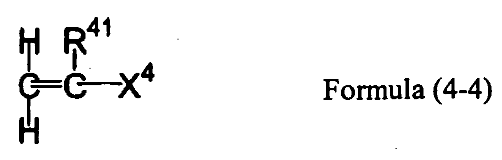

In formula (4-4), R⁴¹ has the same definition as that of R¹ in formula (4), and X⁴ represents a pyrrolidino group, a pyrrolidyl group, a pyridyl group, a piperidino group, or a morpholino group.

Preferable examples of compounds represented by formula (4) include: (meth)acrylates such as N,N-dimethylaminoethyl (meth)acrylate, N,N-dimethylaminopropyl (meth)acrylate, 1-(N,N-dimethylamino)-1,1-dimethylmethyl (meth)acrylate, N,N-dimethylaminohexyl (meth)acrylate, N,N-diethylaminoethyl (meth)acrylate, N,N-diisopropylaminoethyl (meth)acrylate, N,N-di-n-butylaminoethyl (meth)acrylate, N,N-di-i-butylaminoethyl (meth)acrylate, morpholinoethyl (meth)acrylate, piperidinoethyl (meth)acrylate, 1-pyrrolidinoethyl (meth)acrylate, N,N-methyl-2-pyrrolidylaminoethyl (meth)acrylate, and N-methylphenylaminoethyl (meth)acrylate; (meth)acrylamides such as dimethyl (meth)acrylamide, diethyl (meth)acrylamide, diisopropyl (meth)acrylamide, di-n-butyl (meth)acrylamide, di-i-butyl (meth)acrylamide, morpholino(meth)acrylamide, piperidino(meth)acrylamide, N-methyl-2-pyrrolidyl (meth)acrylamide, and N,N-methylphenyl (meth)acrylamide; aminoalkyl (meth)acrylamides such as 2-(N,N-dimethylamino)ethyl (meth)acrylamide, 2-(N,N-diethylamino)ethyl (meth)acrylamide, 3-(N,N-diethylamino)propyl (meth)acrylamide, 3-(N,N-dimethylamino)propyl (meth)acrylamide, 1-(N,N-dimethylamino)-1,1-dimethylmethyl (meth)acrylamide, and 6-(N,N-diethylamino)hexyl (meth)acrylamide; and vinyl pyridine.

In a preferable embodiment, the dispersant used in the invention is a copolymer of the monomer described above, and another monomer (additional monomer) copolymerizable therewith.

Examples of the additional monomer copolymerizable therewith include unsaturated carboxylic acids (e.g., (meth)acrylic acid, crotonic acid, itaconic acid, maleic acid, and fumaric acid), aromatic vinyl compounds (e.g., styrene, α-methylstyrene, vinyl toluene, 2-vinyl pyridine, 4-vinyl pyridine, and N-vinyl imidazole), alkyl (meth)acrylates (e.g., methyl (meth)acrylate, ethyl (meth)acrylate, n-butyl (meth)acrylate, and i-butyl (meth)acrylate), alkylaryl (meth)acrylates (e.g., benzyl (meth)acrylate), substituted alkyl acrylate (e.g., glycidyl (meth)acrylate, and 2-hydroxyethyl (metha)acrylate), vinyl carboxylates (e.g., vinyl acetate and vinyl propionate), vinyl cyanides (e.g., (meth)acrylonitrile and α-chloroacrylonitrile), and aliphatic conjugated dienes (e.g., 1,3-butadiene and isoprene). Among these compounds, unsaturated carboxylic acids, alkyl (meth)acrylates, alkylaryl (meth)acrylates, and vinyl carboxylate are preferable.

The dispersant according to the invention is preferably a copolymer of one of the units M-1 to M-16 and the unit derived from the above described polymerizable oligomer (macromonomer), or a copolymer of the unit represented by formula (1), the unit derived from the polymerizable oligomer (macromonomer), and the unit derived from the monomer containing a nitrogen atom. In the copolymer, the quantity of the repeating units represented by M-1 to M-16 (1) is preferably in the range of 5 to 50 wt% (more preferably 5 to 30 wt%) based on the total quantity of the repeating units in the copolymer. The quantity of the repeating units derived from the polymerizable oligomer (macromonomer) is preferably in the range of 30 to 80 wt% (more preferably 50 to 80 wt%) based on the total quantity of the repeating units in the copolymer. The quantity of the repeating units derived from the monomer having a nitrogen-containing group is preferably in the range of 5 to 80 wt% (more preferably 5 to 50 wt%) based on the total quantity of the repeating units in the copolymer.

When the additional monomer copolymerizable therewith is used, the quantity of the repeating units derived from the additional monomer is preferably in the range of 5 to 30 wt% based on the total quantity of the repeating units in the copolymer. The weight-average molecular weight (Mw) of the copolymer is preferably in the range of 1000 to 200000, particularly preferably in the range of 10000 to 100000. This weight-average molecular weight is a polystyrene-equivalent weight-average molecular weight determined by gel permeation chromatography (in which tetrahydrofuran is used as the carrier).

Examples of graft copolymer preferably used in the dispersant are shown below, but the invention is not limited to these examples alone.
1) Copolymer of a monomer producing compound M-1/ polymethyl methacrylate having a methacryloyl group at a terminal thereof (mass ratio of 10:90)
2) Copolymer of a monomer producing compound M-1/ polyethylene glycol mono(meth)acrylate (mass ratio of 15:85)
3) Copolymer of a monomer producing compound M-1/ polycaprolactone having a methacryloyl group at a terminal thereof (mass ratio of 20:80)
4) Copolymer of a monomer producing compound M-4/ polymethyl methacrylate having a methacryloyl group at a terminal thereof (mass ratio of 10:90)
5) Copolymer of a monomer producing compound M-4/ polyethylene glycol mono(meth)acrylate (mass ratio of 20:80)
6) Copolymer of a monomer producing compound M-4/ polycaprolactone having a methacryloyl group at a terminal thereof (mass ratio of 25:75)
7) Copolymer of a monomer producing compound M-4/ 3-(N,N-dimethylamino) propylacryl amide/ polymethyl methacrylate having a methacryloyl group at a terminal thereof (mass ratio of 10:20:70)
8) Copolymer of a monomer producing compound M-4/ 3-(N,N-dimethylamino) propylacryl amide/ polyethylene glycol mono(meth)acrylate (mass ratio of 15:25:65)
9) Copolymer of a monomer producing compound M-4/ 3-(N,N-dimethylamino) propylacryl amide/ polymethyl methacrylate having a methacryloyl group at a terminal thereof/ polyethylene glycol mono(meth)acrylate (mass ratio of 8:22:50:20)
10) Copolymer of a monomer producing compound M-4/ 2-(N,N-dimethylamino) ethyl (meth)acrylate/ polymethyl methacrylate having a methacryloyl group at a terminal thereof (mass ratio of 8:42:50)
11) Copolymer of a monomer producing compound M-4/ 2-vinyl pyridine/ polymethyl methacrylate having a methacryloyl group at a terminal thereof (mass ratio of 20:30:50)
12) Copolymer of a monomer producing compound M-4/ p-vinyl benzyl-N,N-dimethylamine/ polyethylene glycol mono(meth)acrylate (mass ratio of 7:43:50)
13) Copolymer of a monomer producing compound M-4/ 3-(N,N-dimethylamino) ethyl (meth)acrylate/ poly n-butyl methacrylate having a methacryloyl group at a terminal thereof (mass ratio of 10:10:80)
14) Copolymer of a monomer producing compound M-4/ styrene/ polymethyl methacrylate having a methacryloyl group at a terminal thereof (mass ratio of 15:15:70)
15) Copolymer of a monomer producing compound M-4/ N,N-dimethyl acrylamide/ polymethyl methacrylate having a methacryloyl group at a terminal thereof (mass ratio of 20:10:70 or 5:25:70)
16) Copolymer of a monomer producing compound M-6/ 3-(N,N-dimethylamino) propylacrylamide/ polymethyl methacrylate having a methacryloyl group at a terminal thereof (mass ratio of 10:40:50)
17) Copolymer of a monomer producing compound M-6/ 3-(N,N-dimethylamino) propylacrylamide/ polyethylene glycol mono(meth)acrylate (mass ratio of 15:15:70)
18) Copolymer of a monomer producing compound M-6/ 3-(N,N-dimethylamino) propylacrylamide/ polymethyl methacrylate having a methacryloyl group at a terminal thereof (mass ratio of 10:20:70)
19) Copolymer of a monomer producing compound M-13/ 3-(N,N-dimethylamino) ethyl (meth)acrylate/ polymethyl methacrylate having a methacryloyl group at a terminal thereof (mass ratio of 25:25:50)
20) Copolymer of a monomer producing compound M-13/ 4-vinyl pyridine/ polymethyl methacrylate having a methacryloyl group at a terminal thereof (mass ratio of 5:25:70)
21) Copolymer of a monomer producing compound M-13/ 3-(N,N-dimethylamino) ethyl (meth)acrylate/ polyethylene glycol mono(meth)acrylate (mass ratio of 10:30:60)
22) Copolymer of a monomer producing compound M-14/ 3-(N,N-dimethylamino) ethyl (meth)acrylate/ polymethyl methacrylate having a methacryloyl group at a terminal thereof (mass ratio of 15:25:60)

Such graft polymers can be obtained by radical polymerization, in a solvent, of the polymerizable oligomer and, optionally, the monomer having a nitrogen-containing group and/or other additional monomers. In this polymerization, a radical polymerization initiator is used in general. In addition to the initiator, a chain transfer agent (e.g., 2-mercaptoethanol and dodecyl mercaptan) may be further added for the synthesis of the graft polymer.

As the dispersant that may be used in dispersion of the pigment, beside the above described dispersant, another dispersant may be also added as long as the effect of the inventions are not spoiled.

Examples of such dispersant (another dispersant) include a carboxylic ester containing a hydroxyl group, a salt of a long-chain polyamino amide and a polymer acid ester, a salt of polycarboxylic acid of high molecular weight, an unsaturated acid ester of high molecular weight, a copolymer of high molecular weight, a modified polyacrylate, an aliphatic polycarboxylic acid, naphthalene sulfonate-formalin condensate, polyoxy ethylene alkyl phosphoric ester, and pigment derivatives. Commercial high molecular dispersants such as SOLSPERSE series available from Lubrizol may be preferably used.

In the pigment dispersion liquid of the invention, only one dispersant may be added, or two or more types may be used in combination. The content of the dispersant in the pigment dispersion liquid is, relative to the content of the pigment, preferably 1 to 100 mass %, more preferably 2 to 80 mass %, and still more preferably 5 to 50 mass %. The content of 1 to 100 mass % of the dispersant relative to the content of the pigment is preferred because it is possible to improve the dispersibility of fine pigment and stability thereof, and enhance notably clear color tone and high coloring power.

The content of the above described "another dispersant" is preferred to be 50 mass % or less of the content of the dispersant.

As a dispersing auxiliary, a synergist depending on the pigment may be properly used. These dispersants and dispersing auxiliaries are preferably added by 1 to 50 parts by mass relative to 100 parts by mass of the pigment.

### Polymerizable compound

The pigment dispersion liquid of the invention contains at least a polymerizable compound. The polymerizable compound preferably functions as a dispersion medium for other components such as a pigment. It is particularly preferred to select a cation polymerizable compound that has low viscosity from the viewpoint of improvement of dispersion suitability and handling performance when used in an ink composition.

As long as the effects of the invention are not spoiled, a dispersion medium may be used. However, since the ink composition of the invention is a radiation curing type ink, it is preferred not to contain solvent in order to cure the ink after the ink is applied on a recording medium. This is because if the solvent remains in the cured ink image, it may cause deterioration of solvent resistance, or problems of VOC (volatile organic compound) due to the residual solvent.

As the polymerizable compound, known polymerizable (e.g. radical polymerizable, cation polymerizable, or capable of dimerization reaction) or crosslinking materials may be applied.

Examples of the polymerizable compound include an addition polymerizable compound containing at least one ethylenically unsaturated double bond, an epoxy compound, an oxethane compound, an oxirane compound, a high molecular weight compound having a maleimide group in its side chain, and a high molecular weight compound having a cinnamyl group having an unsaturated double bond capable of optical dimerization adjacent to an aromatic nucleus, a cinnamilydene group or a chalcone group in its side chain.

The addition polymerizable compound containing at least one ethylenically unsaturated double bond may be selected from compounds (monofunctional compounds or multifunctional compounds) having one or preferably two or more terminal ethylenically unsaturated bonds.

Specifically, it may be properly selected from well-known materials in the industrial field relating to the invention, and may be in a chemical form of, for example, a monomer, a prepolymer, that is, a dimer, a trimer or an oligomer or a mixture thereof, or a copolymer thereof.

The polymerizable compound preferably contains, in the molecule, a polymerizable group such as an acryloyl group, a methacryloyl group, an allyl group, a vinyl group, or an internal double bond group (maleic acid, etc.). The polymerizable compound is particularly preferably a compound having an acryloyl group or a methacryloyl group from the viewpoint of induction of curing reaction at low energy.

The multifunctional compound may be, for example, an aromatic compound containing a vinyl group, a (meth)acrylate that is an ester of a di or higher valent alcohol and (meth)acrylic acid, a (meth)acrylic amide that is an amide of a di or higher valent amine and (meth)acrylic acid, polyester (meth)acrylate in which (meth)acrylic acid is introduced into an ester or a polycaprolactone obtained by bonding of a polybasic acid and a dihydric alcohol, a polyether (meth)acrylate in which (meth)acrylic acid is introduced into an ether obtained by bonding of an alkylene oxide and a polyhydric alcohol, an epoxy (meth)acrylate obtained by introducing (meth)acrylic acid to an epoxy resin, or reaction between a di or higher valent alcohol and an epoxy-containing monomer, an urethane acrylate having an urethane bond, an amino acrylate resin, an acrylic acrylate resin, an alkyd acrylate resin, a spirane acrylate resin, a silicone acrylate resin, a reaction product of an unsaturated polyester and a photopolymerizable monomer, and a reaction product of a wax and a polymerizable monomer.

It is preferable to include at least one selected from a monofunctional (meth)acrylate or a difunctional (meth)acrylate as the polymerizable compound of the invention.

In particular, the polymerizable compound is preferably a (meth)acrylate, a polyester (meth)acrylate, a polyether (meth)acrylate, an epoxy acrylate, an urethane acrylate, an acrylic acrylate resin, a silicone acrylate resin, and a reaction product of an unsaturated polyester and a photopolymerizable monomer, and particularly preferably an acrylate, a polyester acrylate, a polyether acrylate, an epoxy acrylate, or an urethane acrylate.

Throughout the specification, the (meth)acrylic acid means both acrylic acid and methacrylic acid.

Specific examples of the multifunctional compound include divinyl benzene, 1,3-butane diol diacrylate, 1,6-hexane diol diacrylate, pentaerythritol triacrylate, trimethylol propane triacrylate, dipentaerythritol hexacrylate, 1,6-acryloyl aminohexane, hydroxy pivalic ester neopentyl glycol diacrylate, polyester acrylate having a (meth)acryloyl group at a molecular chain terminal of polyester of molecular weight of 500 to 30000 composed of a dibasic acid and a dihydric alcohol, polyethylene glycol diacrylate, epoxy acrylate of molecular weight of 450 to 30000 having a bisphenol (A or S, F) skeleton, epoxy acrylate of molecular weight of 600 to 30000 having a skeleton of phenol novolak resin, a reaction product of polyvalent isocyanate of molecular weight of 350 to 30000 and a (meth)acrylic monomer having a hydroxy group, and urethane modified product having an urethane bond in the molecule.

Examples of the monofunctional compound include (meth)acrylate, styrene, acrylamide, monomers containing a vinyl group (vinyl esters, vinyl ethers, N-vinylamide, etc.), and (meth)acrylic acid, and (meth)acrylate, acrylamide, vinyl esters, and vinyl ethers are preferred, and in particular (meth)acrylate and acrylamide are preferred.

The polymerizable compound may be substituted or unsubstituted, and the substituent which may be introduced into the polymerizable compound may be, for example, a halogen atom, a hydroxyl group, an amido group, or a carboxylic group.

Specific examples of the monofunctional compound include hydroxy ethyl acrylate, glycidyl acrylate, tetrahydrofurfuryl acrylate, dicyclopentenyl acrylate, 2-acryloyl oxyethyl phosphate, allyl acrylate, N,N-dimethyl aminoethyl acrylate, N,N-dimethyl acrylamide, N,N-diethyl aminopropyl acrylamide, N-butoxy methyl acrylamide, acryloyl morpholine, 2-hydroxyethyl vinyl ether, N-vinyl formamide, N-vinyl acetamide, 2-cyclohexyl carbamoyl oxyethyl acrylate, an acrylate having a polybutyl acrylate moiety in its ester, and acrylate having a polydimethyl siloxane moiety in its ester.

The polymerizable compound used in the pigment dispersion liquid of the invention is preferably a cation polymerizable compound described above, that is, it is preferred to use a cation polymerizable compound as a compound that is cured by inducing polymerization reaction by an active species generated from a photopolymerization initiator.

The cation polymerizable compound is explained below.

As the cation polymerizable compound, for example, a cation polymerizable monomer known as a photo cation polymerizable monomer can be used. Examples of the cation polymerizable monomer include vinyl ether compounds, oxethane compounds, and oxirane compounds disclosed in publications such as JP-A Nos. 6-9714, 2001-31892, 2001-40068, 2001-55507, 2001-310938, 2001-310937, and 2001-220526.

Examples of the vinyl ether compound include di- or tri-vinyl ether compounds such as ethylene glycol divinyl ether, diethylene glycol divinyl ether, triethylene glycol divinyl ether, propylene glycol divinyl ether, dipropylene glycol divinyl ether, butane diol divinyl ether, hexane diol divinyl ether, cyclohexane dimethanol divinyl ether, and trimethylol propane trivinyl ether; mono vinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexane dimethanol monovinyl ether, n-propyl vinyl ether, isopropyl vinyl ether, isopropenylether-O-propylene carbonate, dodecyl vinyl ether, diethylene glycol monovinyl ether, and octadecyl vinyl ether.

Among the vinyl ether compounds, di- or tri-vinyl ether compounds are preferred from the viewpoint of curing property, adhesion with recording medium, and surface hardness of formed image, and in particular divinyl ether compounds are preferred.

### Compound containing an oxethane group/containing an oxirane group

The pigment dispersion liquid of the invention preferably contains at least one selected from a compound containing an oxethane group or a compound containing an oxirane group, as the cation polymerizable compound, and more preferably contains at least one compound containing an oxethane group and at least one compound containing an oxirane group.

These compounds are polymerized by irradiation with active energy rays by the action of a photopolymerization initiator described later, and are cured. These compounds enable curing reaction in a short time, and hence very effective from the viewpoint of working efficiency.

When both a compound containing an oxethane group (p) and a compound containing an oxirane group (q) are used, the blending ratio (by mass) p/q is preferably in a range of 50/50 to 95/5 from the viewpoint of effectively enhancing the curing properties, more preferably 67/33 to 90/10.

### Compound containing an oxethane group

The compound containing an oxethane group may be properly selected from the compounds having at least one oxethane group (oxethanyl group) in the molecule thereof.

For example, the compound having at least one oxethane group in its molecule is preferably represented by the following formula (P1-a), and the compound having two or more oxethane groups in its molecule is preferably represented by the following formula (P1-b).

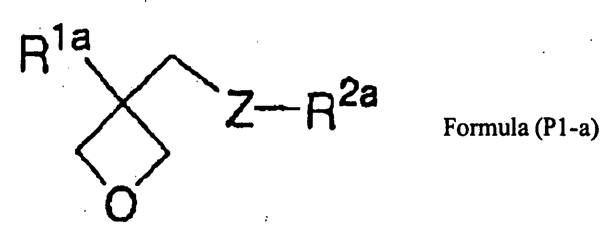

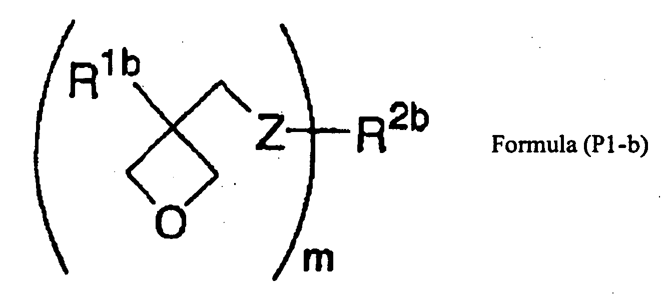

The compound containing an oxethane group represented by formula (P1-a) is explained.

In formula (P1-a), Z represents an oxygen atom or a sulfur atom, Z is preferably a sulfur atom. R^{1a} represents a hydrogen atom, a fluorine atom, an alkyl group having 1 to 6 carbon atoms (e.g., a methyl group, an ethyl group, a propyl group, a butyl group), a fluoroalkyl group having 1 to 6 carbon atoms, an allyl group, an aryl group, a furyl group, or a thienyl group, and R^{1a} is preferably an alkyl group having 1 to 6 carbon atoms (particularly, a methyl group or an ethyl group).

R^{2a} represents a hydrogen atom, an alkyl group having 1 to 6 carbon atoms (e.g., methyl group, ethyl group, propyl group, butyl group), an alkenyl group having 1 to 6 carbon atoms (e.g., a 1-propenyl group, a 2-propenyl group, a 2-methyl-1-propenyl group, a 2-methyl-2-propenyl group, a 1-butenyl group, a 2-butenyl group, a 3-butenyl group), an aryl group (e.g., a phenyl group, a benzyl group, a fluorobenzyl group, a methoxybenzyl group, a phenoxyethyl group), an alkyl carbonyl group having 1 to 6 carbon atoms (e.g., a propyl carbonyl group, a butyl carbonyl group, a pentyl carbonyl group), an alkoxy carbonyl group having 1 to 6 carbon atoms (e.g., an ethoxy carbonyl group, a propoxy carbonyl group, a butyloxy carbonyl group), and an alkoxy carbamoyl group having 1 to 6 carbon atoms (e.g., an ethoxy carbamoyl group, a propoxy carbamoyl group, a butyl pentyloxy carbamoyl group).

Among the compounds containing an oxethane group represented by formula (P1-a), preferable examples include compounds in which, for example, R^{1a} is a lower alkyl group (particularly, an ethyl group), R^{2a} is a hydrogen atom, a butyl group, a phenyl group, or a benzyl group, and Z is an oxygen atom is preferable. The lower alkyl group is an alkyl group having 1 to 3 carbon atoms (same hereinafter).

The compound containing an oxethane group represented by formula (P1-a) may be used either alone or in combination of two or more thereof.

The compound containing an oxethane group represented by formula (P1-b) is explained.

In formula (P1-b), m represents 2, 3 or 4, and Z represents an oxygen atom or a sulfur atom, and is preferably an oxygen atom.

In formula (P1-b), R^{1b} represents a hydrogen atom, a fluorine atom, an alkyl group having 1 to 6 carbon atoms (e.g., a methyl group, an ethyl group, a propyl group, a butyl group), a fluoroalkyl group having 1 to 6 carbon atoms, an ally group, an aryl group, or a furyl group.

R^{2b} represents a linear or branched alkylene group having 1 to 12 carbon atoms, a linear or branched poly(alkyleneoxy) group, or a divalent group selected from the group consisting of the following formulae (P3), (P4), and (P5).

The linear or branched alkylene group having 1 to 12 carbon atoms is preferably a group represented by the following formula (P2). In formula (P2), R³ represents a lower alkylene group such as a methylene group, an ethylene group, a propylene group, or the like.

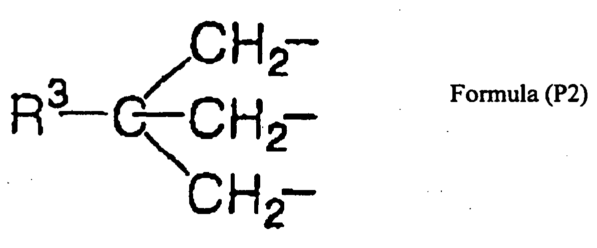

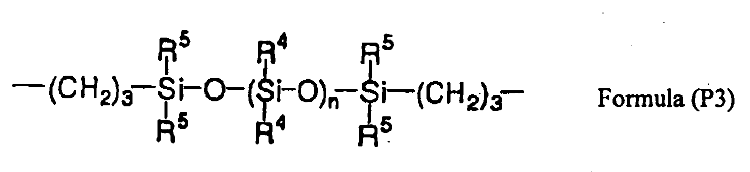

In formula (P3), n is 0 or an integer of 1 to 2000, R⁴ represents an alkyl group having 1 to 10 carbon atoms (e.g., a methyl group, an ethyl group, a propyl group, a butyl group, a pentyl group, a hexyl group, a heptyl group, an octyl group, a nonyl group), or a group selected from the groups represented by the following formula (P6). R⁵ represents an alkyl group having 1 to 10 carbon atoms (e.g., a methyl group, an ethyl group, a propyl group, a butyl group, a pentyl group, a hexyl group, a heptyl group, an octyl group, a nonyl group), and is preferably a methyl group.

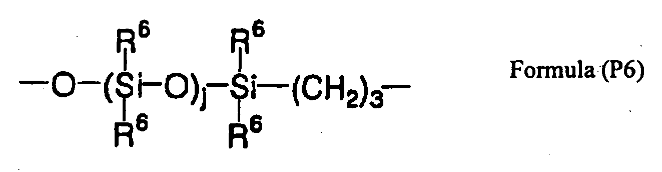

In formula (P6), j is 0 or an integer of 1 to 100, R⁶ represents an alkyl group having 1 to 10 carbon atoms (e.g., a methyl group, an ethyl group, a propyl group, a butyl group, a pentyl group, a hexyl group, a heptyl group, an octyl group, a nonyl group), and is preferably a methyl group.

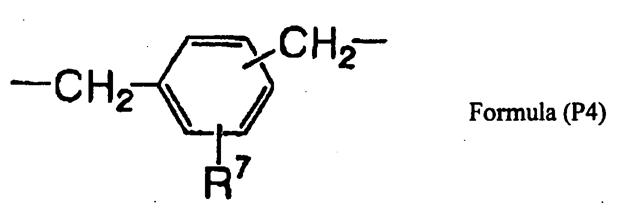

In formula (P4), R⁷ represents a hydrogen atom, an alkyl group having 1 to 10 carbon atoms (e.g., a methyl group, an ethyl group, a propyl group, an butyl group, a pentyl group, a hexyl group, a heptyl group, an octyl group, a nonyl group), an alkoxy group having 1 to 10 carbon atoms (e.g., a methoxy group, an ethoxy group, a propoxy group, a butoxy group, a pentoxy group), a halogen atom (e.g., a fluorine atom, a chlorine atom, a bromine atom, an iodine atom), a nitro group, a cyano group, a mercapto group, alkoxycarbonyl group (e.g., a methyloxy carbonyl group, an ethyloxy carbonyl group, a butyloxy carbonyl group), or a carboxyl group.

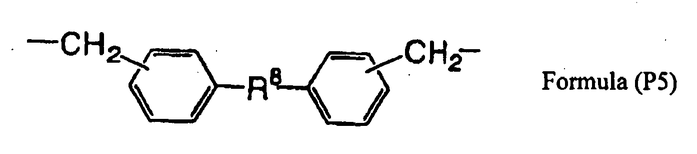

In formula (P5), R⁸ represents an oxygen atom, a sulfur atom, NH, SO, SO₂, CH₂, C(CH₃)₂, or C(CF₃)₂.

Among the compounds containing an oxethane group represented by formula (P1-b), preferable examples include compounds in which R^{1b} in formula (P1-b) represents a lower alkyl group (e.g., a methyl group, an ethyl group, a propyl group, or the like), and particularly preferably an ethyl group; R^{2b} represents a group represented by formula (P4) in which R⁷ is a hydrogen atom, a hexamethylene group, a group represented by formula (P2) in which R³ is an ethylene group, or a group represented by formula (P3) in which R⁵ is a methyl group, and R⁴ is represented by formula (P6) in which R⁶ is a methyl group; Z is an oxygen atom; and m is 2.

Examples of the compound containing two or more oxethane groups in its molecule include the compounds represented by formula (P7) or (P8).

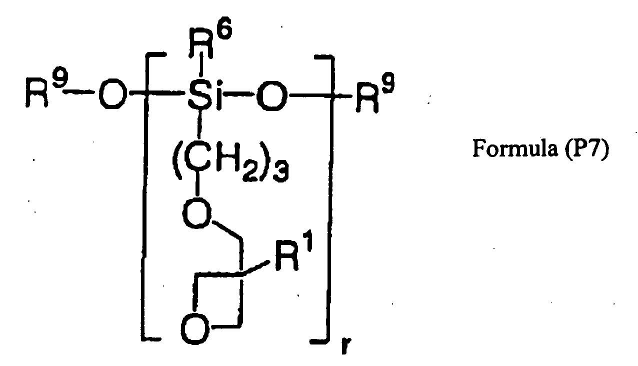

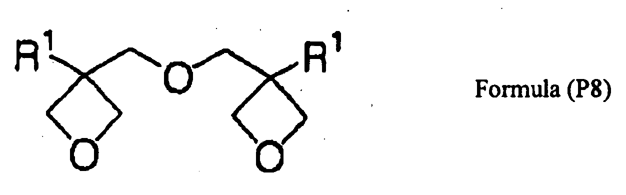

In formula (P7), r represents an integer of 25 to 200, and R⁹ represents an alkyl group having 1 to 4 carbon atoms or a trialkyl silyl group. R¹ in formula (P7) and formula (P8), and R⁶ in formula (P7) have the same definition as those of R^{1b} in formula (P1-b) and R⁶ in formula (P6) respectively.

Preferred examples of the compound containing an oxethane group represented by formula (P1-a) or (P1-b) are listed below [exemplary compounds 1 to 37, and (a) to (f)]. However, the invention is not limited to these examples alone.

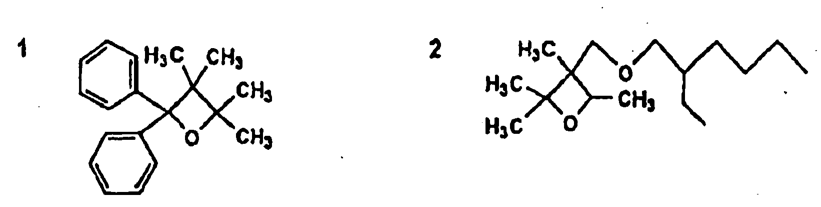

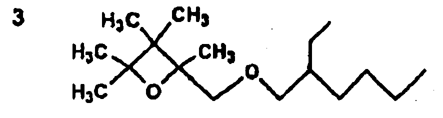

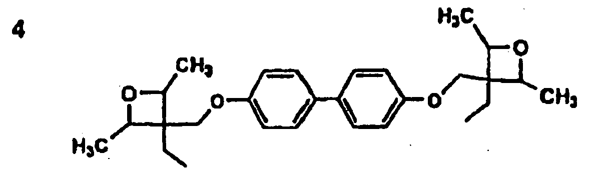

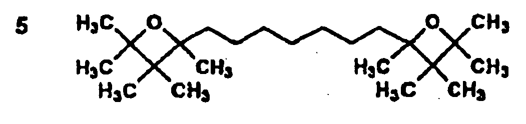

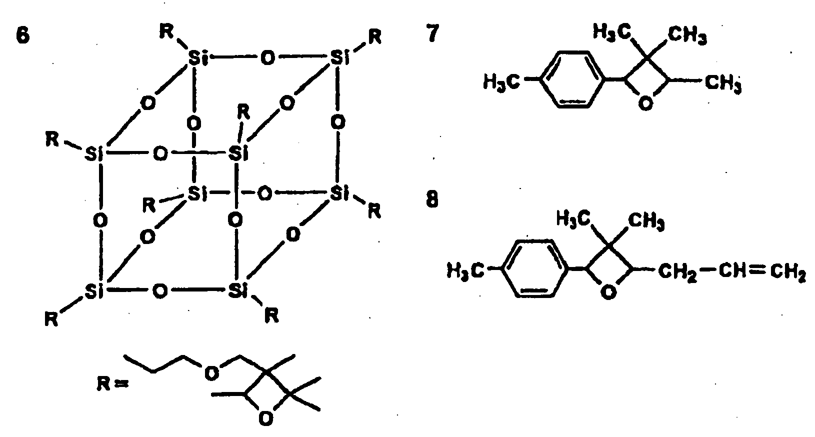

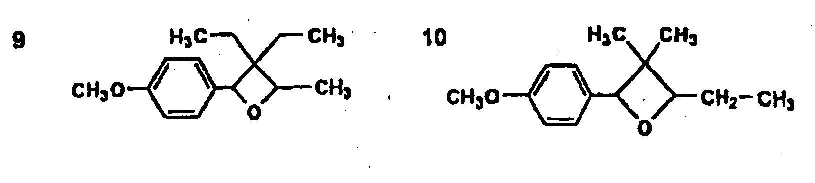

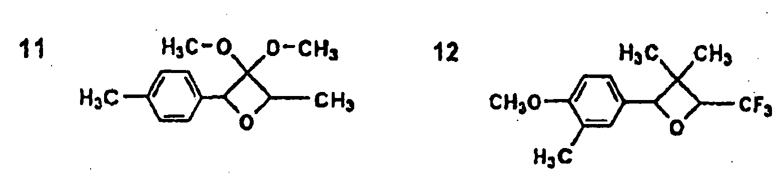

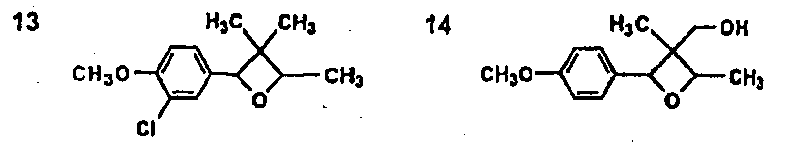

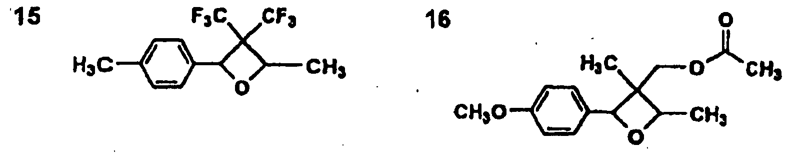

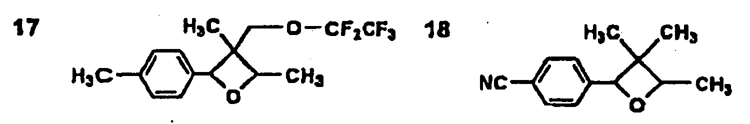

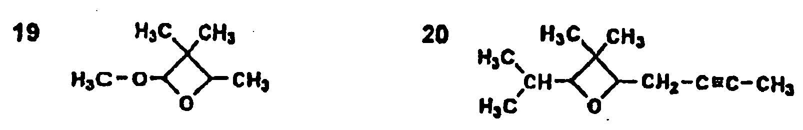

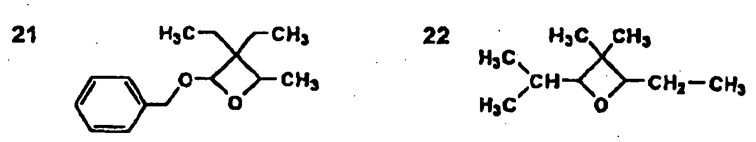

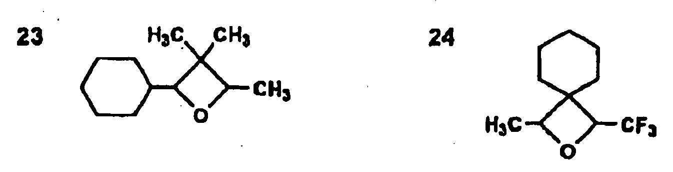

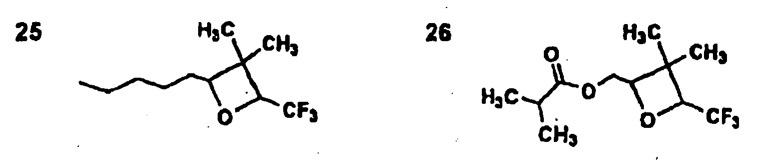

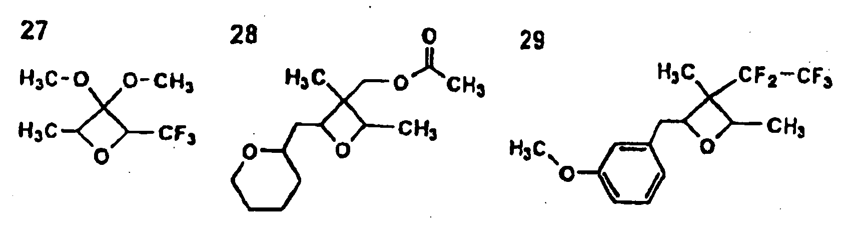

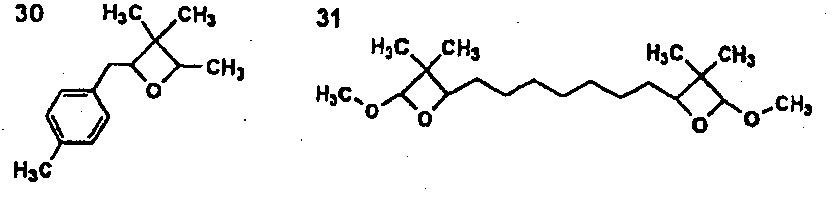

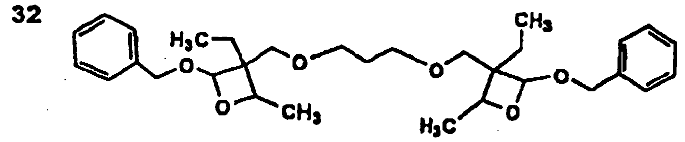

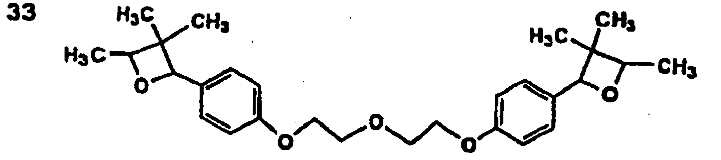

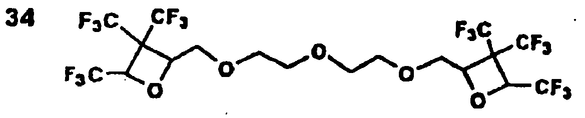

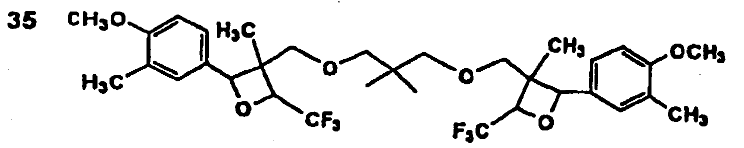

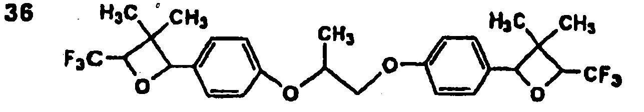

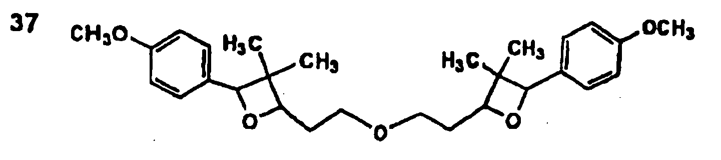

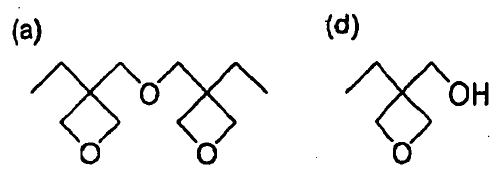

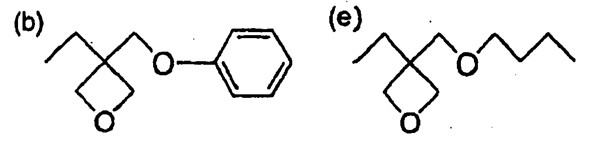

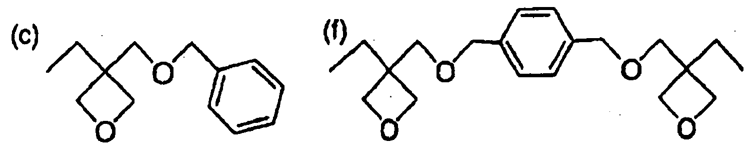

The compound containing an oxethane group can be synthesized by the following methods: (1) H. A. J. Curless, "Synthetic Organic Photochemistry," Plenum, New York (1984), (2) M. Braun, Nachr. Chem. Tech. Lab., 33, 213 (1985), (3) S. H. Schroeter, J. Org. Chem., 34, 5, 1181 (1969), (4) D. R. Arnold, Adv. Photochem., 6, 301 (1968), (5) "Heterocyclic Compounds with Three- and Four-membered Rings," Part Two, Chapter IX, Interscience Publishers, John Wiley & Sons, New York (1964), (6) Bull. Chem. Soc. Jpn., 61, 1653 (1988), (7) Pure Appl. Chem., A29 (10), 915 (1992), (8) Pure Appl. Chem., A30 (2& 3), 189 (1993), (9) JP-A No. 6-16804, and (10) German Patent No. 1,021,858.

The compound containing an oxethane group represented by formula (P1-b) can be used either alone or in combination of two or more thereof.

Among the compounds containing an oxethane group, in particular, exemplary compound (a), exemplary compound (b), exemplary compound (d), and exemplary compound (f) are preferred.

### Compound containing an oxirane group

The compound containing an oxirane group is a compound containing at least one oxirane group (oxiranyl group) having an oxirane ring in its molecule, and can be specifically selected from those generally used as epoxy resins. The compound containing an oxirane group may be of any one of a monomer, an oligomer, or a polymer.

Specific examples of the compound containing an oxirane group include known aromatic epoxy resins, alicyclic epoxy resins, and aliphatic epoxy resins. Herein, the epoxy resin may be any one of a monomer, an oligomer, or a polymer.

Preferable examples of the aromatic epoxy resin include a di- or poly-glycidyl ether manufactured by reaction of a polyhydric phenol having at least one aromatic nucleus or an alkylene oxide adduct thereof and epichlorohydrine. Examples thereof include a di- or poly-glycidyl ether of bisphenol A or an alkylene oxide adduct thereof, a di- or poly-glycidyl ether of hydrogenated bisphenol A or an alkylene oxide adduct thereof, and novolak type epoxy resin. As the alkylene oxide, ethylene oxide or propylene oxide may be used.

Preferable examples of the alicyclic epoxy resin include a cyclohexene oxide- or cyclopentene oxide-containing compound that is obtained by epoxydizing a compound having at least one cycloalkane ring such as a cyclohexene or cyclopentene ring by using a proper oxidizer such as hydrogen peroxide or peracid. Examples thereof include 3,4-epoxy cyclohexyl methyl-3,4-epoxy cyclohexyl carboxylate and the like.

Preferable examples of the aliphatic epoxy resin include a di- or poly-glycidyl ether of an aliphatic polyhydric alcohol or an alkylene oxide adduct thereof. Examples thereof include diglycidyl ethers of an alkylene glycol such as diglycidyl ether of ethylene glycol, diglycidyl ether of propylene glycol, and diglycidyl ether of 1,6-hexane diol; polyglycidyl ethers of a polyhydric alcohol such as di- or tri-glycidyl ether of glycerol or an alkylene oxide adduct thereof ; diglycidyl ethers of a polyalkylene glycol such as diglycidyl ether of polyethylene glycol or an alkylene oxide adduct thereof, diglycidyl ether of polypropylene glycol or an alkylene oxide adduct thereof. Examples of the alkylene oxide include ethylene oxide and propylene oxide.

Other examples of the compound containing an oxirane group include monomers having one oxirane ring in its molecule, such as a monoglycidyl ether of an aliphatic higher alcohol, a monoglycidyl ether of phenol, cresol or an alkylene oxide adduct thereof.

The compound containing an oxirane group may be used either alone or in combination of two or more thereof.

Preferred examples of the compound containing an oxirane group are listed below [exemplary compounds (i) to (viii)]. However, the invention is not limited to these examples alone.

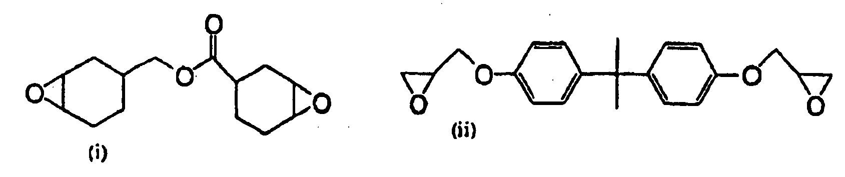

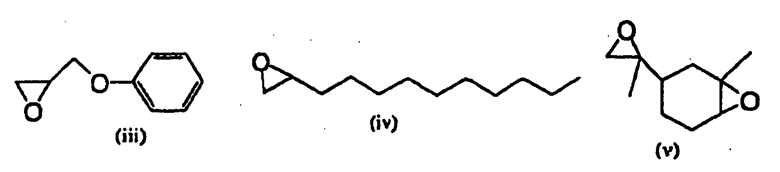

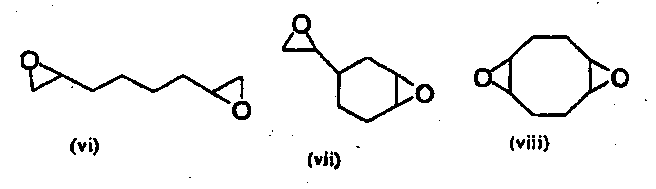

Among the compounds containing an oxirane group, in particular, exemplary compound (i) and exemplary compound (v) are preferred.

In an embodiment, it is preferred to use both the compound containing an oxethane group and the compound containing an oxirane group. In an embodiment, it is preferable to use exemplary compound (a) and exemplary compound (i) in combination, or exemplary compound (b) and exemplary compound (v) in combination, from the viewpoint of enhancing the curing properties effectively.

The content of the polymerizable compound in the pigment dispersion liquid of the invention is preferably 1 to 15 mass %, more preferably 2 to 12 mass % and still more preferably 4 to 8 mass %, relative to the total mass of the pigment dispersion liquid, from the viewpoint of viscosity of the pigment dispersion liquid.

The polymerizable compound in the invention may be used either alone or in combination of two or more types. However, since it takes time in fixing if water or an aqueous solvent is contained, the polymerizable compound is preferred to be nonaqueous.

The ink composition of the invention and the components of the ink composition are described specifically below.

### Ink composition

The ink composition of the invention includes a nonaqueous pigment dispersion liquid, a polymerizable compound, and a photopolymerization initiator.

Since the ink composition includes the components as described above, the ink composition is excellent in filtering performance and ejecting property, and low in haze.

The nonaqueous pigment dispersion liquid is manufactured by the manufacturing method of a nonaqueous pigment dispersion liquid as described above. As the polymerizable compound, the polymerizable compounds explained in the manufacturing method of a nonaqueous pigment dispersion liquid can be used, and preferred examples are also the same those described in the manufacturing method of a nonaqueous pigment dispersion liquid.

Components of the ink composition of the invention other than those explained above are specifically described below.

### Photopolymerization Initiator

The ink composition of the invention should contain a photopolymerization initiator for radical polymerization or cation polymerization from the viewpoint of ink curing properties based on polymerization reaction.

The photopolymerization initiator in the invention is a compound that is chemically changed by the action of radiation or by the interaction with the electron excited state of a sensitizer, to form at least one of radical, acid, and base. Among these compounds, the polymerization initiator is preferably a photoradical generator or a photoacid generator, from the viewpoint that radiation that is a convenient means can be used for initiating polymerization.

The photopolymerization initiator may be selected appropriately from initiators having sensitivity to the active ray for irradiation, such as UV ray at 400 to 200 nm, far UV ray, g-line, h-line, i-line, KrF excimer laser light, ArF excimer laser light, electron ray, X-ray, molecular beam, or ion beam.

Specifically, any of common photopolymerization initiators known in the art may be used. Specific examples thereof are described, for example, in Bruce M. Monroe et al., Chemical Revue, 93, 435 (1993); R, S. Davidson, Journal of Photochemistry and biology, A: Chemistry, 73, 81 (1993); J. P. Faussier, "Photoinitiated Polymerization-Theory and Applications": Rapra Review vol. 9, Report, Rapra Technology (1998); and M. Tsunookaetal., Prog. Polym. Sci., 21, 1 (1996). Many compounds which can be used in chemical-amplification photoresists and for photocationic polymerization are also described in Japanese Research Association for Organic Electronics Materials Ed., "Organic Materials for Imaging" (published by Bun-Shin Shuppan (1993), pp. 187 to 192). The compounds that undergo oxidative or reductive bond cleavage through the interaction with the electronically-excited state of sensitizer are also known, and described, for example in F. D. Saeva, Topics in Current Chemistry, 156, 59 (1990); G. G. Maslak, Topics in Current Chemistry, 168, 1 (1993); H. B. Shuster et al., JACS, 112, 6329 (1990); I. D. F. Eaton et al., JACS, 102, 3298 (1980), the disclosures of which are incorporated herein by reference.

Preferable examples of such photopolymerization initiators include (a) aromatic ketones, (b) aromatic onium salt compounds, (c) organic peroxides, (d) hexaarylbiimidazole compounds, (e) ketoxime ester compounds, (f) borate compounds, (g) azinium compounds, (h) metallocene compounds, (i) active ester compounds, (j) and compounds containing a carbon-halogen bond.

Preferable examples of the aromatic ketones (a) include the compounds each having a benzophenone or thioxanthone skeleton described, for example in "Radiation Curing in Polymer Science and Technology" J. P. Fouassier and J. F. Rabek (1993), pp. 77 to 117. More preferable examples of the aromatic ketones (a) include the α-thio benzophenone compounds described in Japanese Patent Application Publication (JP-B) No. 47-6416 (the disclosure of which is incorporated herein by reference); the benzoin ether compounds described in JP-B No. 47-3981; the α-substituted benzoin compounds described in JP-B No. 47-22326; the benzoin derivatives described in JP-B No. 47-23664; the aroyl phosphonic acid esters described in Japanese Patent Application Laid-Open (JP-A) No. 57-30704; the dialkoxybenzophenones described in JP-B No. 60-26483; the benzoin ethers described in JP-B No. 60-26403 and JP-A No. 62-81345; the α-amino benzophenones described in JP-B No. 1-34242, U.S. Patent No. 4,318,791, and EP Patent No. 0284561A1; p-di(dimethylaminobenzoyl)benzene described in JP-A No. 2-211452 ; the thio-substituted aromatic ketones described in JP-A No. 61-194062; the acylphosphine sulfides described in JP-B No. 2-9597; the acylphosphines described in JP-B No. 2-9596; the thioxanthones described in JP-B No. 63-61950; and the coumarins described in JP-B No. 59-42864.

Examples of the aromatic onium salt compounds (b) include aromatic onium salts of the elements in Groups V, VI and VII in the periodic table, specifically, aromatic onium salts ofN, P, As, Sb, Bi, O, S, Se, Te, and I. Preferable examples thereof include the iodonium salts described in EP Patent No. 104143, U.S. Patent No. 4837124, and JP-A Nos. 2-150848 and 2-96514; the sulfonium salts described in EP Patent Nos. 370693, 233567, 297443, 297442, 279210, and 422570 and U.S. Patent Nos. 3902144, 4933377, 4760013, 4734444, and 2833827; diazonium salts (e.g., benzene diazonium salts which may be substituted); diazonium salt resins (e.g., formaldehyde resins of diazodiphenylamine); N-alkoxypyridinium salts (e.g., those described in U.S. Patent No. 4,743,528, JP-A Nos. 63-138345, 63-142345, and 63-142346, and JP-B No. 46-42363, and specifically, 1-methoxy-4-phenylpyridinium tetrafluoroborate, etc.); and the compounds described in JP-B Nos. 52-147277, 52-14278, and 52-14279. The aromatic onium salt compound (b) generates a radical or an acid as an active species.

Examples of the organic peroxides (c) include almost all organic compounds having one or more oxygen-oxygen bonds in the molecule; and preferable examples thereof include peroxide esters such as 3,3',4,4'-tetra-(t-butylperoxycarbonyl)benzophenone, 3,3',4,4'-tetra-(t-amylperoxycarbonyl)benzophenone, 3,3',4,4'-tetra-(t-hexylperoxycarbonyl)benzophenone, 3,3',4,4'-tetra-(t-octylperoxycarbonyl)benzophenone, 3,3',4,4'-tetra-(cumylperoxycarbonyl)benzophenone, 3,3',4,4'-tetra-(p-isopropyl cumylperoxycarbonyl)benzophenone, and di-t-butyl diperoxyisophthalate.

Examples of the hexaarylbiimidazole compounds (d) include the Rofin dimers described in JP-B Nos. 45-37377 and 44-86516, such as 2,2' -bis(o-chlorophenyl)-4,4' ,5,5' -tetraphenylbiimidazole, 2,2'-bis(o-bromophenyl)-4,4',5,5'-tetraphenylbiimidazole, 2,2'-bis(o-, p-dichlorophenyl)-4,4',5,5'-tetraphenylbiimidazole, 2,2'-bis(o-chlorophenyl)-4,4',5,5'-tetra(m-methoxyphenyl)biimidazole, 2,2'-bis(o-, o'-dichlorophenyl)-4,4',5,5'-tetraphenylbiimidazole, 2,2'-bis(o-nitrophenol)-4,4',5,5'-tetraphenylbiimidazole, 2,2'-bis(o-methylphenyl)-4,4',5,5'-tetraphenylbiimidazole, and 2,2'-bis(o-trifluorophenyl)-4,4',5,5'-tetraphenylbiimidazole.

Examples of the ketoxime ester compounds (e) include 3-benzoyloxyiminobutan-2-one, 3-acetoxyiminobutan-2-one, 3-propionyloxyiminobutan-2-one, 2-acetoxyiminopentane-3 -one, 2-acetoxyimino-1-phenylpropan-1-one, 2-benzoyloxyimino-1-phenylpropan-1-one, 3-p-toluenesulfonyloxyiminobutan-2-one, and 2-ethoxycarbonyloxyimino-1-phenylpropan-1-one.

Examples of the borate compounds (f) include the compounds described in U.S. Patent Nos. 3,567,453 and 4,343,891, and EP No. 109,772 and 109,773.

Examples of the azinium salt compounds (g) include the compounds containing an N-O bond described in JP-ANos. 63-138345, 63-142345, 63-142346, and 63-143537, and JP-B No. 46-42363.

Examples of the metallocene compounds (h) include the titanocene compounds described in JP-A Nos. 59-152396, 61-151197, 63-41484, 2-249, and 2-4705 and the iron-allene complexes described in JP-ANos. 1-304453 and 1-152109.

Specific examples of the titanocene compounds include di-cyclopentadienyl-Ti-dichloride, dicyclopentadienyl-Ti-bisphenyl, di-cyclopentadienyl-Ti-bis-2,3,4,5,6-pentafluorophen-1-yl, di-cyclopentadienyl-Ti-bis-2,3,5,6-tetrafluorophen-1-yl, di-cyclopentadienyl-Ti-bis-2,4,6-trifluorophen-1-yl, di-cyclopentadienyl-Ti-2,6-difluorophen-1-yl, di-cyclopentadienyl-Ti-bis-2,4-difluorophen-1-yl, di-methylcyclopentadienyl-Ti-bis-2,3,4,5,6-pentafluorophen-1-yl, di-methylcyclopentadienyl-Ti-bis-2,3,5,6-tetrafluorophen-1-yl, di-methylcyclopentadienyl-Ti-bis-2,4-difluorophen-1-yl, bis(cyclopentadienyl)-bis(2,6-difluoro-3-(pyr-1-yl)phenyl)titanium, bis(cyclopentadienyl)-bis[2,6-difluoro-3-(methyl sulfonamide)phenyl]titanium, and bis(cyclopentadienyl)-bis[2,6-difluoro-3-(n-butylbiaroyl-amino)phenyl)titanium.

Examples of the active ester compounds (i) include the nitrobenzylester compounds described in EP Patent Nos. 0290750, 046083, 156153, 271851, and 0388343, U.S. Patent Nos. 3901710 and 4181531, and JP-ANos. 60-198538 and 53-133022; the iminosulfonate compounds described in EP Patent Nos. 0199672, 84515, 199672, 044115, and 0101122, U.S. Patent Nos. 4618564, 4371605 and 4431774, and JP-A Nos. 64-18143, 2-245756, and 4-365048; and the compounds described in JP-B Nos. 62-6223 and 63-14340, and JP-A No. 59-174831.

Preferable examples of the compounds (j) containing carbon-halogen bonds include the compounds described in Wakabayashi et al., Bull. Chem. Soc, Japan, 42, 2924 (1969) (the disclosure of which is incorporated herein by reference); the compounds described in British Patent 1388492; the compounds described in JP-A No. 53-133428; and the compounds described in German Patent 3337024.

Further examples include the compounds described in F. G. Schaefer et al., J. Org. Chem. 29, 1527 (1964); the compounds described in JP-ANo. 62-58241; the compounds described in JP-A No. 5-281728; as well as the compounds described in German Patent No. 2641100; the compounds described in German Patent No. 3333450; the compounds described in German Patent No. 3021590; and the compounds described in German Patent No. 3021599.

Preferable specific examples of the compounds represented by (a) to (j) are shown below:

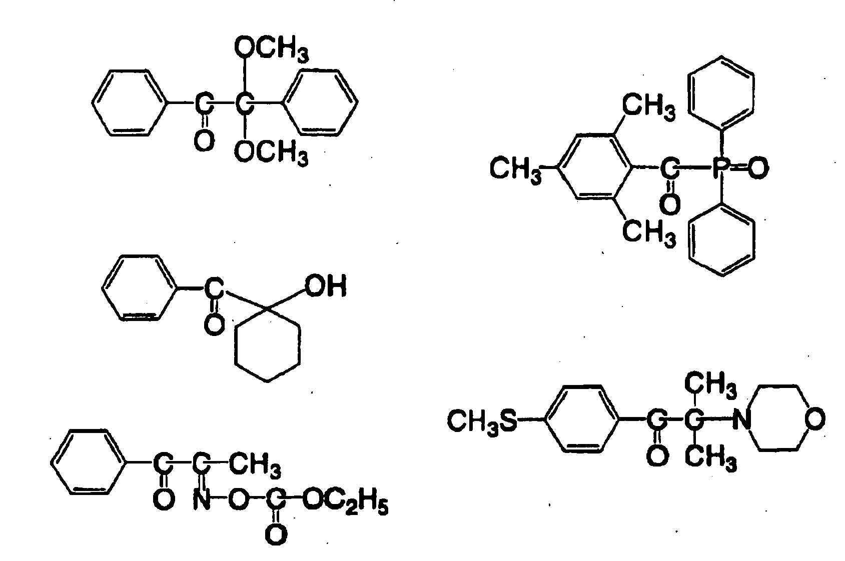

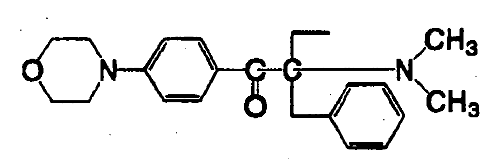

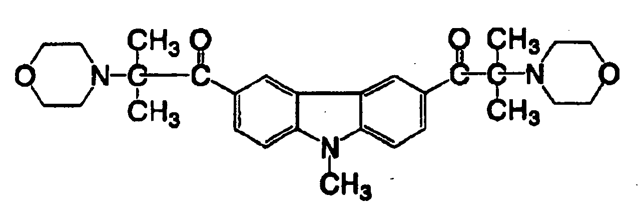

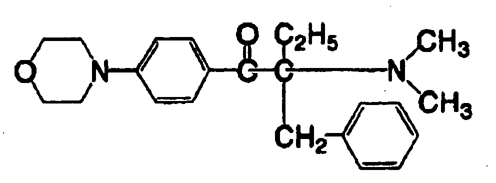

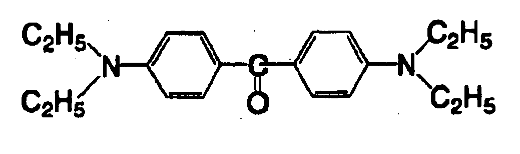

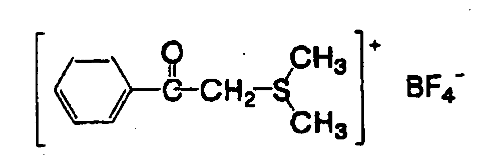

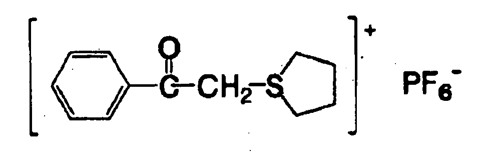

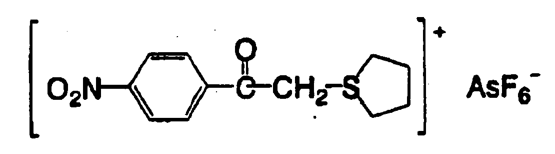

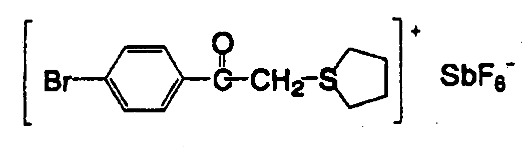

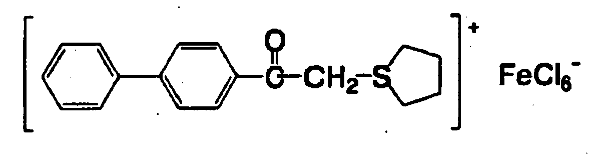

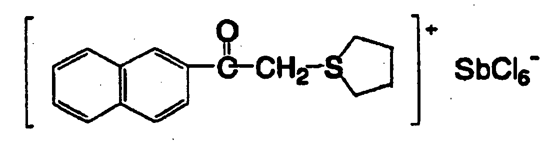

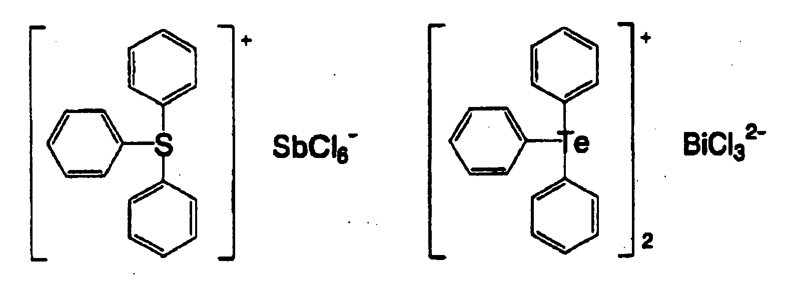

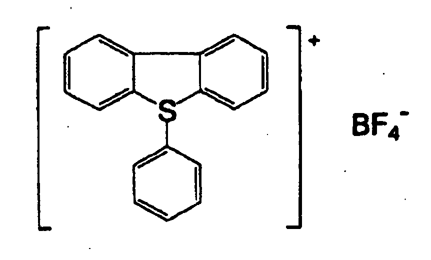

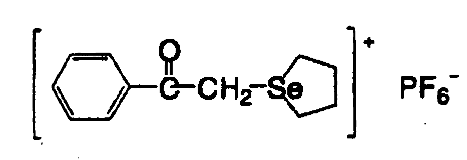

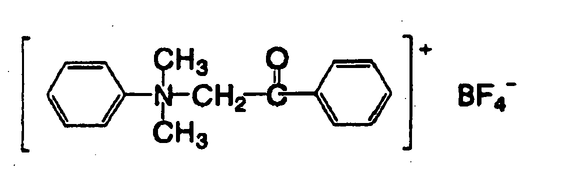

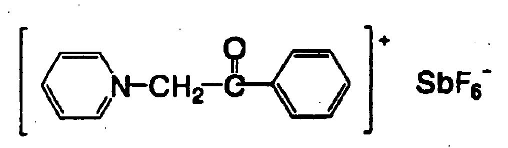

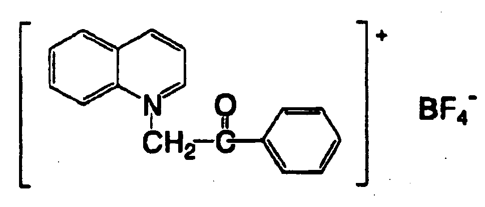

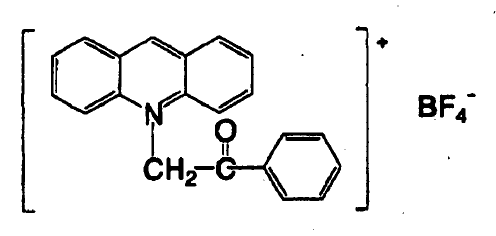

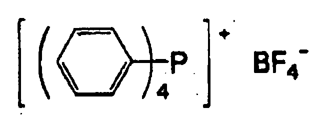

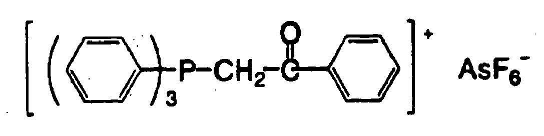

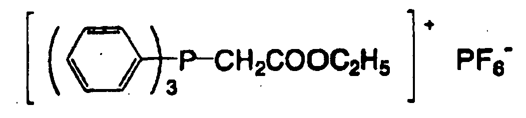

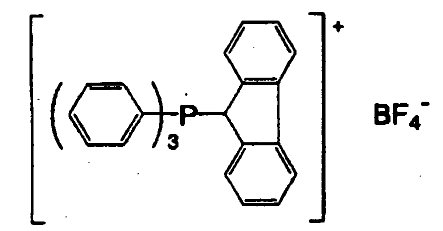

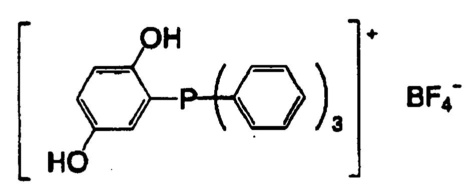

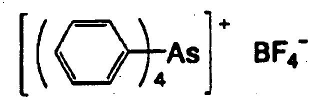

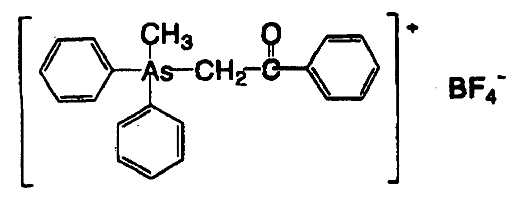

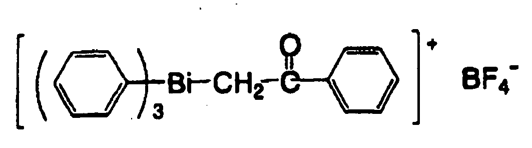

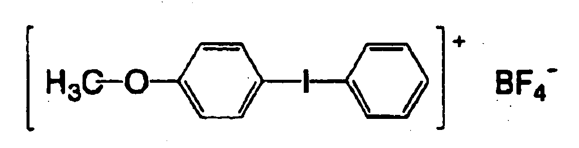

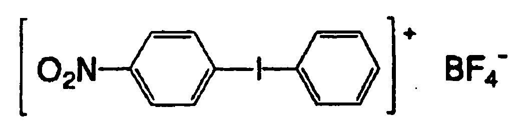

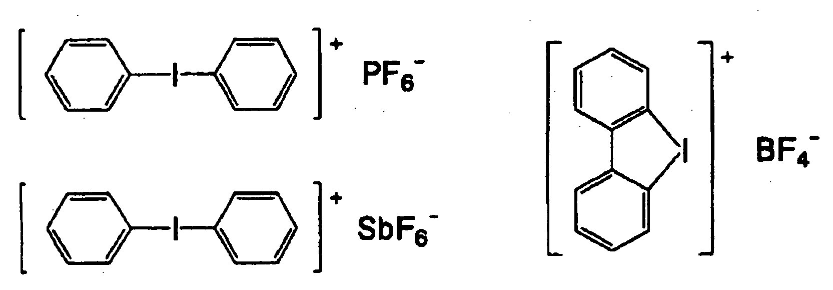

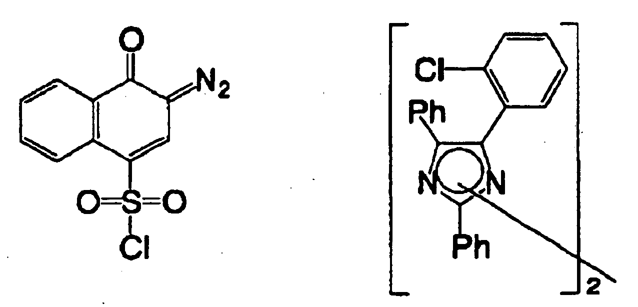

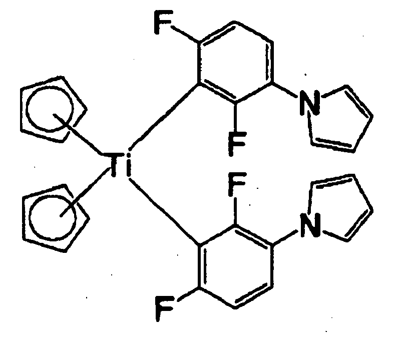

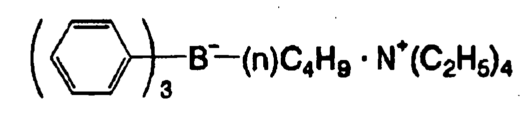

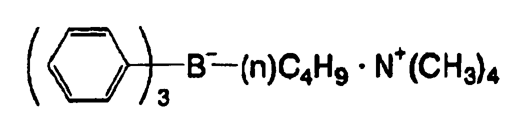

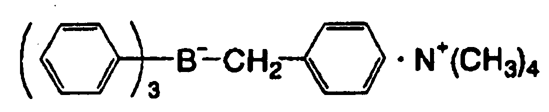

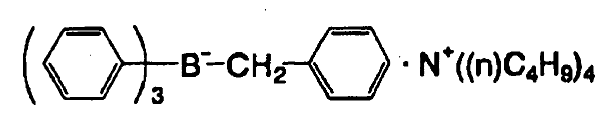

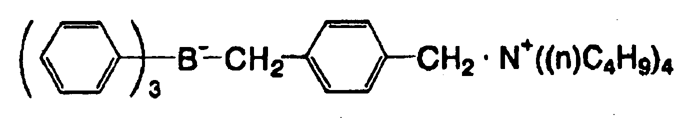

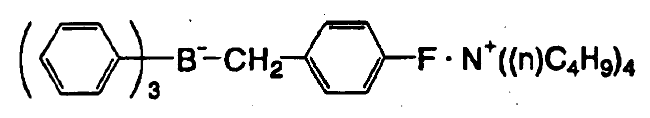

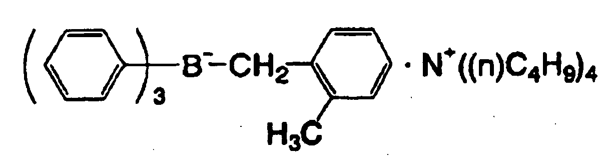

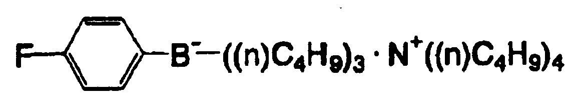

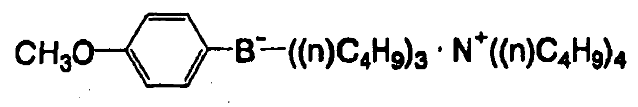

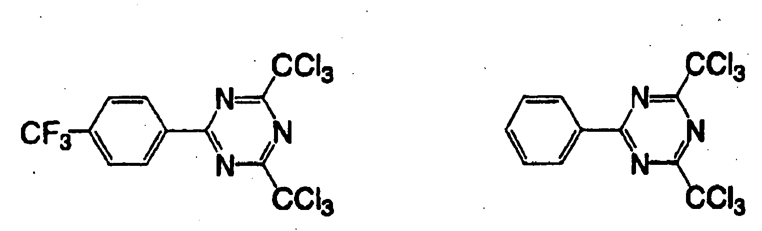

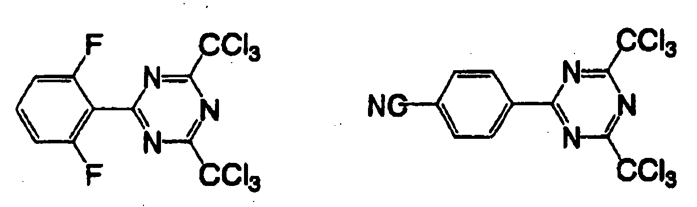

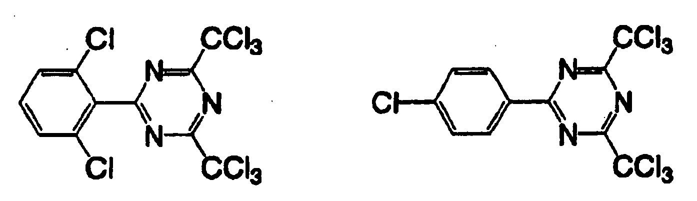

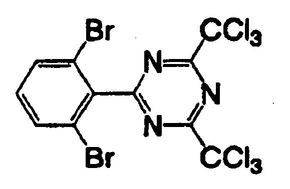

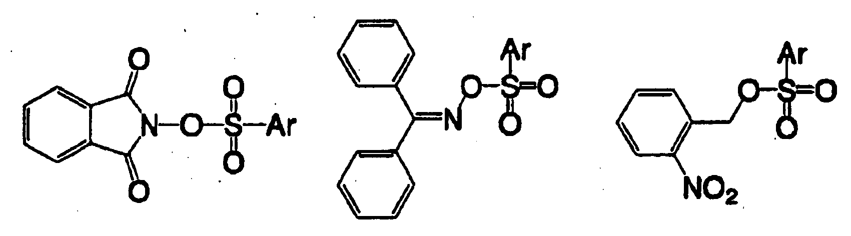

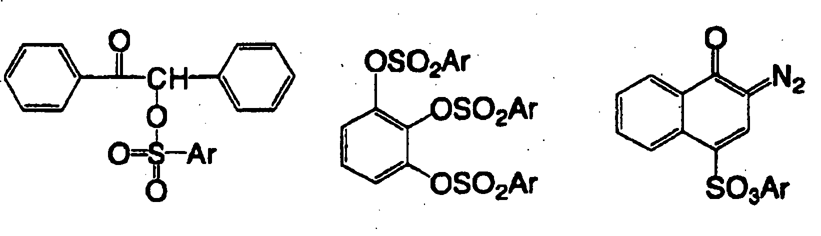

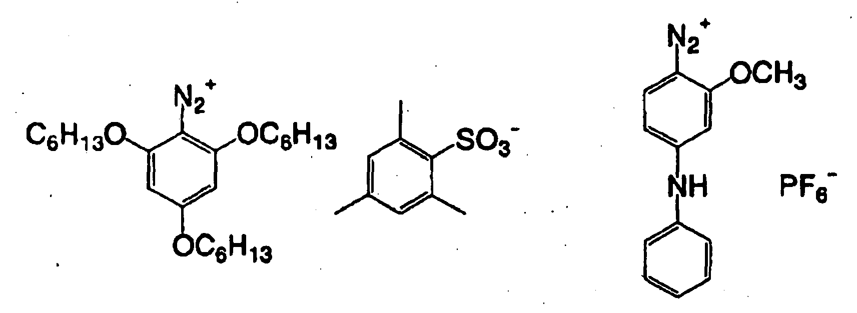

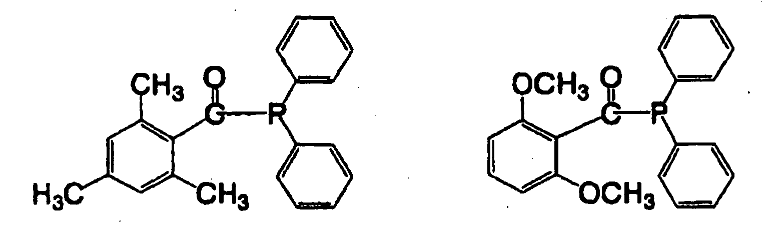

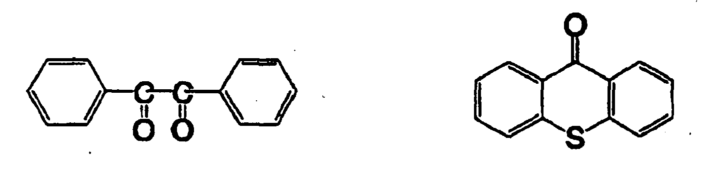

Only one photopolymerization initiator may be used, or two or more photopolymerization initiators may be used in combination. The concentration by mass of the photopolymerization initiator is preferably 0.1 to 18 % by mass, more preferably 2 to 12 % by mass, still more preferably 3 to 9 % by mass, from the viewpoint of curing properties.

### Sensitizer

In the invention, a sensitizer may be added for the purpose of improving the sensitivity of the photopolymerization initiator.

Preferable examples of the sensitizer include those belonging to the following compound classes and having absorption wavelengths in the range of 350 to 450 nm: multinuclear aromatics (e.g., pyrene, perylene, and triphenylene), xanthenes (e.g., fluorescein, eosin, erythrosine, rhodamine B, and Rose Bengal), cyanines (e.g., thiacarbocyanine and oxacarbocyanine), merocyanines (e.g., merocyanine and carbomerocyanine), thiazines (e.g., thionine, methylene blue, and toluidine blue), acridines (e.g., acridine orange, chloroflavin, and acryflavin), anthraquinones (e.g., anthraquinone), squaliums (e.g., squalium), coumarins (e.g., 7-diethylamino-4-methyl coumarin).

More preferable examples of the sensitizer include compounds represented by the following formulae (IX) to (XIII):

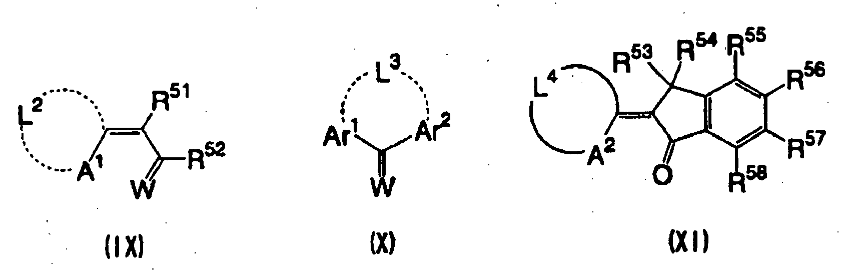

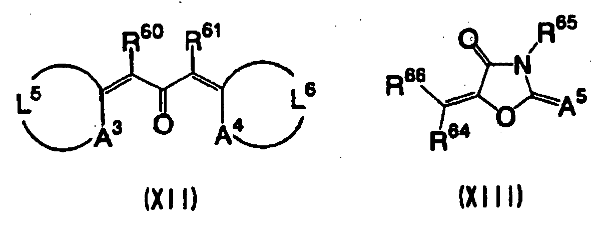

In formula (IX), A¹ represents a sulfur atom or NR⁵⁰, R⁵⁰ represents an alkyl group or an aryl group, L² represents a nonmetallic atomic group which, together with A¹ and the carbon atom adjacent thereto, forms a basic nucleus of a dye, R⁵¹ and R⁵² each independently represent a hydrogen atom or a monovalent nonmetallic atomic group, R⁵¹ and R⁵² may be bound to each other to form an acidic nucleus of a dye, and W represents an oxygen atom or a sulfur atom.

In formula (X), Ar¹ and Ar² each independently represent an aryl group, and are bound to each other via a linkage -L³- which represents -O- or -S-. W has the same definition as in formula (IX).

In formula (XI), A² represents a sulfur atom or NR⁵⁹, L⁴ represents a nonmetallic atomic group which, together with A² and the carbon atom adjacent thereto, forms a basic nucleus of a dye, R⁵³, R⁵⁴, R⁵⁵, R⁵⁶, R⁵⁷ and R⁵⁸ each independently represent a monovalent nonmetalic atomic group and R⁵⁹ represents an alkyl group or an aryl group.

In formula (XII), A³ and A⁴ each independently represent -S- or -NR⁶² or NR⁶³-. R⁶² and R⁶³ each independently represent a substituted or unsubstituted alkyl group or a substituted or unsubstituted aryl group. L⁵ represents a nonmetallic atomic group which, together with A³ and the carbon atom adjacent thereto, forms a basic nucleus of a dye. L⁶ represents a nonmetallic atomic group which, together with A⁴ and the carbon atom adjacent thereto, forms a basic nucleus of a dye. R⁶⁰ and R⁶¹ each independently represent a hydrogen atom or a monovalent nonmetallic atomic group, or R⁶⁰ and R⁶¹ are bound to each other to form an aliphatic or aromatic ring.

In formula (XIII), R⁶⁶ represents an optionally substituted aromatic cycle or heterocycle, A⁵ represents an oxygen atom, a sulfur atom, or -NR⁶⁷-, R⁶⁴, R⁶⁵, and R⁶⁷ each independently represent a hydrogen atom or a monovalent nonmetallic atomic group. R⁶⁷ and R⁶⁴ may be bonded to each other to form an aliphatic or aromatic ring. R⁶⁵ and R⁶⁷ may be bonded to each other to form an aliphatic or aromatic cycle.

Preferable examples of the compounds represented by formulae (IX) to (XIII) include exemplary compounds (A-1) to (A-20) shown below:

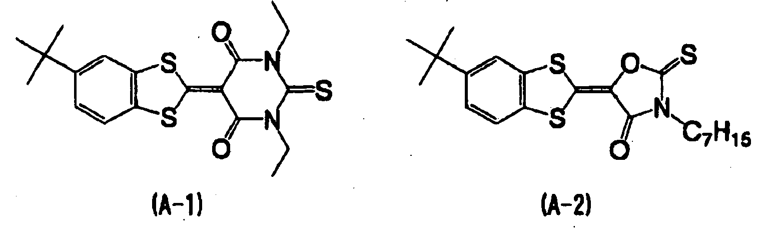

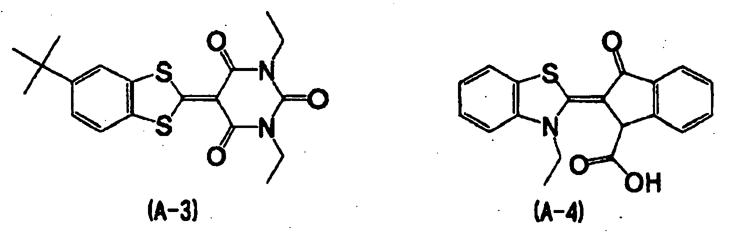

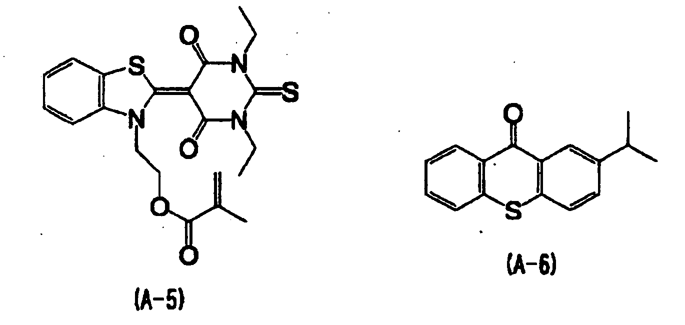

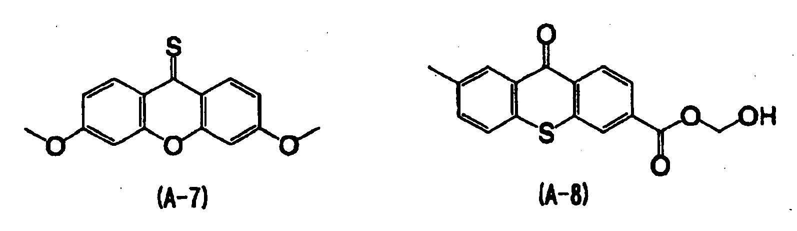

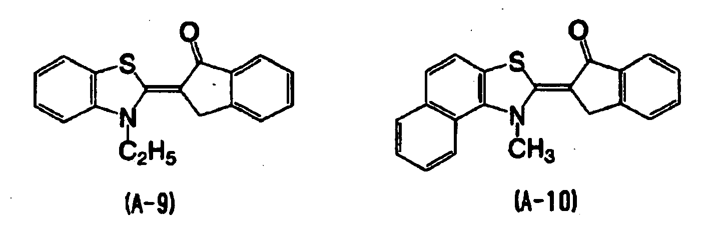

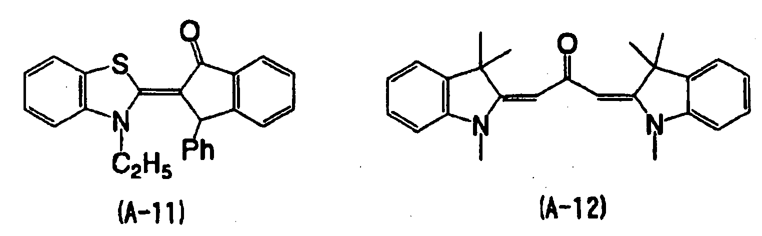

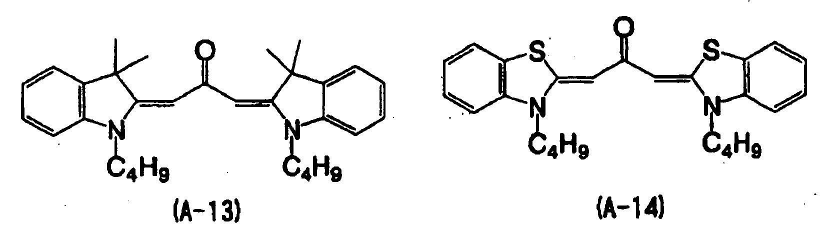

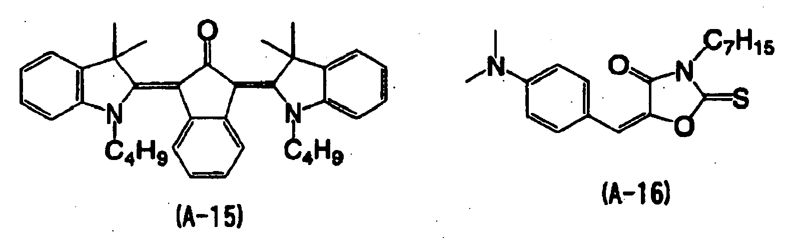

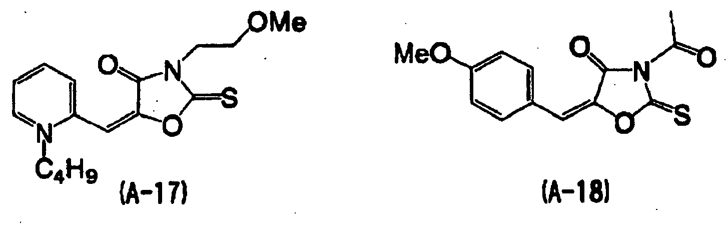

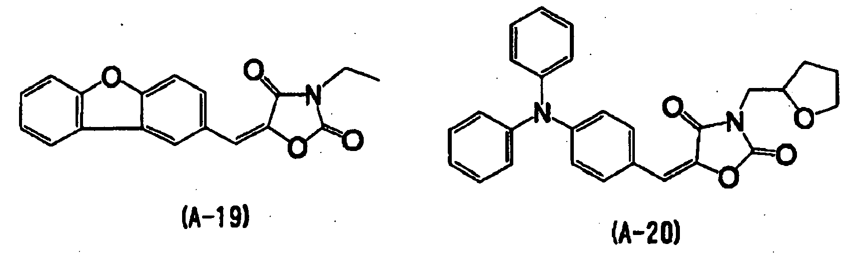

### Cosensitizer

To the ink composition of the invention, a known compound that has a function of further improving the sensitivity or suppressing the inhibition of polymerization by oxygen may be added as a cosensitizer.

Examples of the cosensitizer include the amines described, for example, in M. R, Sander et al., "Journal of Polymer Society" 10, p. 3173, (1972), JP-B No. 44-20189, JP-A Nos. 51-82102, 52-134692, 59-138205, 60-84305, 62-18537, and 64-33104 and Research Disclosure 33825; and specific examples thereof include triethanolamine, ethyl p-dimethylaminobenzoate, p-formyldimethylaniline, and p-methylthiodimethylaniline.

Other examples of the cosensitizer include thiols and sulfides, for example, the thiol compounds described in JP-A No. 53-702, JP-B No. 55-500806, and JP-A No. 5-142772 (the disclosures of which are incorporated herein by reference), and the disulfide compounds described in JP-A No. 56-75643 (the disclosure of which is incorporated herein by reference); and specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g., N-phenylglycine), the organic metal compounds described in JP-B No. 48-42965 (e.g., tributyltin acetate), the hydrogen donors described in JP-B No. 55-34414, the sulfur compounds described in JP-A No. 6-308727 (e.g., trithiane), the phosphorus compounds described in JP-ANo. 6-250387 (e.g., diethyl phosphite), and the Si-H and Ge-H compounds described in Japanese Patent Application No. 6-191605.

### Polymerization inhibitor

The ink composition of the invention may contain at least one polymerization inhibitor.

The polymerization inhibitor may be properly selected from a group consisting of phenol compounds containing a hydroxyl group, quinones, N-oxide compounds, piperidine-1-oxyl free radical compounds, pyrrolidine-1-oxyl free radical compounds, N-nitrosophenyl hydroxylamines, and cationic dyes.

Examples of the polymerization inhibitor include hydroquinone, p-methoxy phenol, di-t-butyl-p-cresol, pyrogallol, resorcinol, catechol, t-butyl catechol, hydroquinone monoalkylether (e.g., hydroquinone monomethylether, hydroquinone monobutylether), benzoquinone, 4,4-thiobis (3-methyl-6-t-butyl phenol), 2,2'-methylene bis (4-methyl-6-t-butyl phenol), 2,2,6,6-tetramethyl piperidine and derivatives thereof, di-t-butyl nitroxide, 2,2,6,6-tetramethyl piperidine-N-oxide and derivatives thereof, piperidine 1-oxyl free radical, 2,2,6,6-tetramethyl piperidine 1-oxyl free radical, 4-oxo-2,2,6,6-tetramethyl piperidine 1-oxyl free radical, 4-hydroxy-2,2,6,6-tetramethyl piperidine 1-oxyl free radical, 4-acetamide-2,2,6,6-tetramethyl piperidine 1-oxyl free radical, 4-maleimide-2,2,6,6-tetramethyl piperidine 1-oxyl free radical, 4-phosphonoxy-2,2,6,6-tetramethyl piperidine 1-oxyl free radical, 3-carboxy-2,2,5,5-tetramethyl pyrrolidine 1-oxyl free radical, N-nitrosophenyl hydroxylamine cerium (III) salt, N-nitrosophenyl hydroxylamine aluminum salt, crystal violet, methyl violet, ethyl violet, and victoria pure blue BOH.

Among the above compounds, hydroquinone monoalkylethers, such as hydroquinone monomethylether and hydroquinone monobutylether, and hindered phenols such as 4,4'-thiobis (3-methyl-6-t-butyl phenol) and 2,2'-methylene bis (4-methyl-6-t-butyl phenol) are preferred.

The content of the polymerization inhibitor in the ink composition is preferred to be 50 to 30000 ppm relative to the total amount (total mass) of the ink composition, more preferably 100 to 10000 ppm, and still more preferably 100 to 3000 ppm.

In the ink composition of the invention may include any of the dispersants mentioned in the manufacturing method of the pigment dispersion liquid, and preferred examples of the dispersant are the same as those described in the manufacturing method of the dispersion liquid.

The ink composition of the invention preferably contains a known surface active agent as a dispersant (dispersant other than those described above) for adjusting the liquid properties, such as a nonionic surface active agent, a cationic surface active agent, an organic fluoro compound.

Examples of such known surface active agents include those disclosed, for example, in JP-ANos. 62-173463 and 62-183457.

Specific examples include anionic surface active agents such as dialkyl sulfosuccinates, alkyl naphthalene sulfonates and aliphatic acid salts; nonionic surface active agents such as polyoxy ethylene alkyl ethers, polyoxy ethylene alkyl allyl ethers, acetylene glycols and polyoxy ethylene polyoxy propylene block copolymers; cationic surface active agents such as alkylamines and quaternary ammonium salts. Instead of these known surface active agents, organic fluoro compounds may be also used.

The organic fluoro compound is preferred to be hydrophobic. Examples of the organic fluoro compound include fluorine surface active agents (e.g., MEGAFACE F444, F475, and F476, all manufactured by Dainippon Ink and Chemicals, Inc.), oily fluorine compounds (e.g., fluorine oil), and solid fluorine compound resins (e.g., tetrafluoroethylene resin), including those disclosed in the publications Japanese Patent Application Publication (JP-B) No. 57-9053 (columns 8 to 17), and JP-ANo. 62-135826.

In addition to the sensitizer and cosensitizer that can be used together with the essential components such as the photopolymerization initiator, the ink composition according to the invention may further contain various additives in accordance with the purposes. For example, an ultraviolet absorbent may be added to the ink composition according to the invention, for the improvement in the weather fastness of the obtained image and prevention of the discoloration of the image. An antioxidant may be used to improve the stability of the ink composition.

Other usable additives include: an organic or metal-complex-based anti-fading agent; a conductive salt for the control of the ejection properties, such as potassium thiocyanate, lithium nitrate, ammonium thiocyanate, or dimethylamine hydrochloride salt; and a trace amount of an organic solvent for the improvement of the adhesion to the recording medium.

The ink composition according to the invention may further contain a polymer compound selected from various polymer compounds for the purpose of the adjustment of the film physical properties. Examples of polymer compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinyl resins, acrylic resins, rubber resin, waxes, and other natural resins. In an embodiment, two or more polymer compounds are used simultaneously.

Other examples of usable additives include leveling additives, matting agents, waxes for controlling the film properties, and tackifiers which does not inhibit polymerization for improving the adhesion to the recording media such as polyolefin and PET. These additives may be added as necessary.

### Other components

Known additives other than the components described above may also be used depending on the purpose.

### Storage stabilizer

The ink composition of the invention may contain a storage stabilizer for the purpose of suppressing undesired polymerization during storage. The storage stabilizer is preferred to be soluble in other coexisting components such as a polymerizable compound.

Examples of the storage stabilizer include quaternary ammonium salt, hydroxy amines, cyclic amides, nitriles, substituted ureas, heterocyclic compounds, organic acids, hydroquinone, hydroquinone monoethers, organic phosphins, and copper compounds, and specific examples include benzyl trimethyl ammonium chloride, diethyl hydroxylamine, benzothiazole, 4-amino-2,2,6,6-tetramethyl piperidine, citric acid, hydroquinone monomethylether, hydroquinone monobutylether, and copper naphthane.

The content of the storage stabilizer is preferably adjusted properly depending on the activity of the polymerization initiator, polymerization performance of the polymerizable compound, and type of the storage stabilizer. The content is preferred to be 0.005 to 1 mass %, more preferably 0.01 to 0.5 mass %, and still more preferably 0.01 to 0.2 mass %, based on the solid content in the liquid, from the viewpoints of storage stability and curing property.

### Conductive salts

Conductive salts are solid compounds for enhancing the conductivity. In the invention, it is preferred not to use substantially because such salts may deposit during storage. However a proper amount of the conductive salt may be added when, for example, solubility is sufficient by enhancing the solubility of conductive salts, or using liquid components having high solubility.

Examples of the conductive salts include potassium thiocyanate, lithium nitrate, ammonium thiocyanate, and dimethylamine salts.

### Solvent

In the invention, a solvent may be used if necessary for improving the polarity or viscosity of liquid (ink), surface tension, solubility or dispersibility of coloring material, or adjusting the conductivity or adjusting the printing performance.

### Other additives

Further, known additives such as a surface tension regulator, an ultraviolet absorber, an antioxidant, a discoloration inhibitor, and a pH regulator may be used.

The surface tension regulator, the ultraviolet absorber, the antioxidant, the discoloration inhibitor, and the pH regulator may be properly selected from known compounds, and, for example, additives disclosed in JP-A No. 2001-181549 may be used.

### Preferable Physical Properties of Ink Composition

When the ink composition according to the invention is used for ink jet recording, considering the ejection efficiency, the ink composition according to the invention preferably has an ink viscosity of 5 to 30 mPa·s, more preferably7 to 20 mPa·s, at the temperature at the time of ejection. It is preferable to adjust and determine the composition properly so that the viscosity falls in the range.

The viscosity at room temperature (25 to 30°C) of the ink composition is preferably 7 to 120 mPa·s, more preferably 10 to 80 mPa·s. By increasing the viscosity at room temperature, it becomes possible to prevent penetration of the ink into the recording medium even when a porous recording medium is used, to reduce the amount of uncured monomer and the odor, to suppress bleeding upon the deposition of ink droplets, and consequently to improve the image quality.

The surface tension of the ink composition according to the invention is preferably 20 to 40 mN/m and more preferably 20 to 30 mN/m. When the ink is used for recording on various recording media such as polyolefin, PET, coated paper, and non-coated paper, the surface tension is preferably 20 mN/m or more in view of the prevention of bleeding and penetration, and 30 mN/m or less in view of the wettability.

The ink composition of the invention is preferably used in inkjet recording. The inkjet recording method is not particularly specified, and the inkjet recording method may be, for example, a charge control method that includes ejecting ink by utilizing an electrostatic inductive force, a drop-on-demand method (pressure pulse method) utilizing vibration pressure of piezo elements, an acoustic inkjet method that includes converting an electric signal into an acoustic beam and irradiating the ink with the beam to eject the ink by utilizing radiation pressure, and a thermal inkjet method that includes heating the ink, forming foams, and utilizing the generated pressure. The inkjet recording methods also include a method of ejecting multiple ink droplets of low concentration, called photo ink, in small volume, a method of using plural types of ink substantially the same in hue but different in concentration, thereby improving the image quality, and a method of using colorless and transparent ink.

The ink composition of the present invention is preferably used for an ink jet recording ink used in the drop-on-demand inkjet recording method (pressure pulse method) utilizing piezo elements.

### Image forming method and recorded material

The ink composition of the invention may be applied to an image forming method including forming an image on a recording material by inkjet recording involving ejection of the ink composition, or an image forming method including forming an image on a recording material using the ink composition of the invention and curing the image by irradiation with an active energy ray (active ray) of the image formed on the recording material by the image forming.

That is, the image forming method of the invention may be either a method including only forming an image by inkjet recording, or a method further including curing the image. Further, the image forming method may be a method including forming an image by a method other than inkjet recording and then curing the image.

In the image curing process of the invention, active energy rays can be utilized. After an image forming process in which an image is formed on the recording material, the formed image is irradiated with active energy ray, whereby polymerization and curing of the polymerizable compound that contributes to imaging take place, and a cured and tough image can be formed favorably.

In the image curing process, exposure for promoting polymerization and curing can be carried out by, for example, using a light source for emitting an active energy ray in a wavelength region corresponding to the sensible wavelength of the ink composition. The light source, exposure time and amount of light can be selected appropriately depending on the degree of polymerization and curing of the polymerizable compound of the invention.

The thickness of the image cured in the image curing process is preferably 2 to 30 µm. The thickness of the image is the thickness of the cured matter of the image formed from the ink composition. Since the thickness of the image is in a range of 2 to 30 µm, images from a low concentration to a high concentration can be expressed.

In the image curing process, exposure for promoting polymerization and curing can be carried out by using a light source for emitting an active energy ray in a wavelength region corresponding to the sensible wavelength of the ink composition. Specifically, a light source emitting an active ray in a wavelength region of 250 to 450 nm, and preferably 365 ± 20 nm, is used, for example, an LD, an LED (light emitting diode), a fluorescent lamp, a low pressure mercury lamp, a high pressure mercury lamp, a metal halide lamp, a carbon arc lamp, a xenon lamp, or a chemical lamp. Preferred examples of the light source include an LED, a high pressure mercury lamp, and a metal halide lamp.

When curing by radical polymerization, since polymerization is disturbed by oxygen, it is possible to cure at low energy by exposure in a low oxygen concentration environment, that is, in a nitrogen or other gas atmosphere.

In one embodiment, the recorded material obtained by using the ink composition of the invention has an image area cured by irradiation with radiation such as an ultraviolet ray, and the strength of the image area is excellent, and thus it can be used as an ink receiving layer (image area) of a planographic printing plate.

In the image forming process, it is preferred to apply an inkjet recording method by using an inkjet printer. Specifically, in the image forming process, it is preferred to form an image by inkjet recording involving ejection of the ink composition.

### Inkjet recording method and inkjet recording apparatus

The inkjet recording method and the inkjet recording apparatus which may be preferably applied in the image forming method of the invention are described below.

### System

An example of the inkjet recording system of ejecting ink is disclosed in JP-A No. 2002-11860, but the invention is not limited to this example alone.

### Ink holding means

As an ink holding means, a known ink cartridge is preferably used to contain ink. As disclosed in JP-A No. 5-16377, ink may be contained in a deformable container used as a tank. As disclosed in JP-A No. 5-16382, when a sub-tank is used, the ink can be supplied to the head more stably. As disclosed in JP-A No. 8-174860, a cartridge may be designed to supply ink by move of a valve when the pressure is lowered in the ink supply chamber. In these ink holding means, as negative pressure applying methods for keeping an appropriate meniscus in the head, following methods may be used. That is, a method by utilizing height of ink holding means, i.e. water head pressure, a method by utilizing capillary pressure of a filter provided in the ink passage, a pressure control method by using a pump or the like, and a method of applying a negative pressure by capillary pressure by holding the ink in an ink absorber as disclosed in JP-A No. 50-74341, and the like.

### Ink supply route

A method of supplying the ink from the ink holding means to the head may be a method of connecting the holding means directly to the head unit, or a method of connecting by a flow passage such as a tube. The ink holding means and the passage are preferred to be made of materials having a favorable wettability to ink, or surface-treated materials.

### Head

An ink droplet ejecting method may be, for example, a method of ejecting ink droplets continuously and deflecting the droplets depending on the image so as to deposit or not to deposit the ink droplets on the recording material, by a selective control method, as disclosed in JP-A No. 5-104725; or a so called on-demand method of ejecting ink droplets only on an area necessary for an image. The on-demand method may be a method in which the ink is ejected by ink pressure generated by deformation of a structural member by using piezoelectric elements or the like, as disclosed in JP-A No. 5-16349. Further, the ink droplet ejecting method may be, for example, a method in which the ink is ejected by pressure generated by expansion due to vaporization by thermal energy as disclosed in JP-A No. 1-234255 or a method in which ink ejection to the recording material is controlled by an electric field as disclosed in JP-A No. 2001-277466.

In the inkjet recording method, an image is recorded on a recording material by using an ink composition of the invention. The ink ejecting nozzles used in the method are not particularly specified, and may be properly selected depending on the purpose. Nozzles disclosed, for example, in JP-A No. 5-31908 may be used. To eject inks of plural colors, for example, as disclosed in JP-A No. 2002-316420, plural nozzles may be disposed in plural columns, and then color images can be formed at high speed. When plural head units each having plural nozzle columns are disposed, a higher speed may be realized.

When nozzles are disposed, as disclosed in JP-A No. 63-160849, in a width the same or greater than the width of the image to form so-called line head, and by moving the recording material simultaneously with ink dropping from these nozzles, images can be formed at high speed.

When the surface of nozzles is treated as disclosed in JP-A No. 5-116327, splashing of ink droplets on nozzle surface and adhesion of ink droplets can be prevented.

Even by such treatment, the nozzle may be stained, and in such a case the ink stains can be cleaned by using blades as disclosed in JP-A No. 6-71904.

Ink compositions of various colors are not always ejected uniformly from the nozzles, and a specific ink may not be ejected for a long time. To maintain the meniscus stably in such a case, as disclosed in JP-A No. 11-157102, the ink may be ejected properly outside the image region, and a fresh ink is supplied in the head, so that physical properties of the ink may be maintained at specified values.

In spite of these measures, foams may invade into the head or may be generated in the head. In such a case, as disclosed in JP-A No. 11-334092, by sucking the ink by force from out of the head, the degenerated ink may be discarded, and foams can be forced out of the head at the same time. If the nozzles are kept without being used for dropping for a long time, as disclosed in JP-ANo. 11-138830, the nozzle surface can be covered with a cap, and thus the nozzle surface can be protected.

In spite of these measures, the nozzles may fail to eject the ink. If an image is printed while part of the nozzles does not eject, problems such as an uneven image may be caused. To avoid such problems, it is effective to detect failure of ejection to take proper measures as disclosed in JP-A No. 2000-343686.

When the head unit is moved mechanically as disclosed in JP-A No. 6-115099, and the ink dropping is carried out in a overlapping manner by moving the recording material synchronously in the orthogonal direction intermittently, unevenness of the image due to defective precision of intermittent move of the recording material may be concealed, and a high image quality may be realized. At this time, by properly setting the relation of the head moving speed, moving distance of recording material, and number of nozzles, the relation of image quality and recording speed can be determined in a favorable relation.

To the contrary, the same effects may be obtained by fixing the head, and moving the recording material mechanically in a specified direction reciprocally, and moving intermittently in orthogonal direction.

### Temperature control

The inkjet recording apparatus is preferred to be provided with a means for stabilizing ink composition temperature, and temperature may be controlled in all piping systems and members from the ink tank (including an intermediate tank if any) to the nozzle ejection surface.

In an embodiment of the inkjet recording method, the ink composition is heated to 40 to 80°C, and the viscosity of ink composition is lowered to 30 mPa·s or less, and preferably 20 mPa·s or less, and then the ink is ejected. By this method a high ejection stability is realized. Generally, in the radiation curing type ink composition, since the viscosity is higher than that of water-based ink, the viscosity fluctuation margin is larger due to temperature changes in printing operation. The viscosity fluctuation margin of the ink composition may have direct effects on the droplet size and droplet ejection speed, thereby deteriorating the image quality, and hence it is preferable to keep constant temperature of ink composition during printing. Accordingly, the apparatus preferably has an ink temperature detecting means, an ink heating means, and a means for controlling heating depending on the detected ink temperature.

The temperature control method is not particularly specified, and it is preferred to use, for example, temperature sensors at plural positions on the piping so as to control heating depending on the flow rate of the ink composition and ambient temperature. The head unit to be heated is preferred to be insulated thermally so as not to receive temperature effects from the atmosphere. To shorten the printer start-up time required for heating, or to decrease loss of thermal energy, it is preferable to insulate from other parts, or reduce the thermal capacity of the entire heating unit.

It is also preferred to have a means for controlling the printing energy applied to the means for ejecting the ink depending on the ink temperature.

The control margin of ink composition temperature is preferably a set temperature ± 5°C, more preferably a set temperature ± 2°C, and still more preferably a set pressure ± 1°C.

### Exposure

The light source may be, for example, a general mercury lamp, a metal halide lamp, a light emitting diode, a semiconductor laser, or a fluorescent lamp. Other examples of the light source include light sources, electromagnetic waves and the like that can be used for promoting ink polymerization reaction, such as a hot cathode tube, a cold cathode tube, electron ray, X-ray.

When a metal halide lamp is used, a lamp of 10 to 1000 W/cm is preferred, and the intensity of illumination on the surface of the recording material is preferred to be 1 mW/cm² to 100 W/cm².

When a high pressure mercury lamp or a metal halide lamp is used, ozone is generated along with progress of electric discharge. Accordingly, it is preferred to have an exhaust means. The exhaust means is preferably disposed to also function to collect the ink mist generated during ink ejection.

Preferred irradiation conditions of active energy ray are described.

A basic method of irradiation is disclosed in JP-A No. 60-132767. Specifically, light sources are installed at both sides of the head unit, and the head and light sources are scanned by shuttle system. Light is emitted in a specific time after the deposition of ink droplets. Further, curing is completed by another light source without drive. WO99/54415 discloses an irradiation method using an optical fiber, and a method in which a collimated light source is set up at the mirror face of the side of a head unit, and UV light is emitted to the recording unit. These methods of irradiation are also applicable in the invention.

When the ink ejection nozzle is irradiated with the active energy light for curing, the ink mist sticking to the nozzle surface is solidified, and ink ejection may be disturbed, and hence it is preferable to take measures for light shielding in order to minimize the irradiation to the nozzle. Specifically, it is preferable to take measures such as providing a partition wall for preventing irradiation to nozzle plate, or providing a means for limiting the incident angle to the recording material for reducing the stray light.

In the invention, the time from ink deposition to start of irradiation with radiation is preferably 0.01 to 0.5 second. Irradiation with radiation is more preferably after 0.01 to 0.3 second of the ink deposition, and still more preferably after 0.01 to 0.15 second of the ink deposition. By thus controlling the time from ink deposition to start of irradiation to a shortest time, it is effective to prevent bleeding of the deposited ink before curing. When using a porous recording medium, exposure can be started before the ink composition permeates into deeper parts out of reach of light source, and residual unreacted monomer can be suppressed, and odor can be reduced as a result. When the inkjet recording method of the invention is combined with the ink composition of the invention, it is possible to obtain an outstanding synergistic effect. By such recording method, the dot diameter of applied ink droplets can be kept constant even on various recording media different in surface wettability, and the image quality is enhanced.

### System parameters

When forming an image, the ink depositing diameter on the recording material is preferred to be in a range of 10 to 500 µm, and hence at the time of ejection, the diameter of ink droplets is preferred to be in a range of 5 to 250 µm, and therefore the nozzle diameter is preferred to be 15 to 100 µm.

To form an image, the number of pixels per 1 inch is preferred to be 50 to 2400 dpi, and hence the nozzle density of the head is preferred to be 10 to 2400 dpi. If the nozzle density of the head is low, by inclining the head to the conveying direction of recording material, or disposing a plurality of head units by deviating relatively, high density ink deposition can be realized by using a head of a wide nozzle interval. Alternatively, by reciprocal moving of the head or recording material, the recording material is conveyed by a specified extent every time the head is moved at low nozzle pitch, and ink droplets are deposited to different positions, so that image recording of high density may be realized.

The amount of ink droplet ejection on recording material is preferably controlled between 0.05 and 25 g/m² in order to express favorable gradation, and in order to realize this range, it is preferable to control the size of ink droplets ejected from the head and the quantity.

If the spacing between the head and the recording material is too wide, flight of ink droplets may be disturbed by air flow due to move of the recording material and thus the deposition position precision may be lowered. If too narrow, the head and the recording material may contact with each other due to undulations of the recording material surface, or vibration caused by conveying mechanism or the like. Therefore it is preferred to maintain at about 0.5 to 2 mm.

### Ink set

The ink may be either a single color, or multiple colors including cyan, magenta, and yellow, or four colors by adding black, or another special color may be added. The coloring material may be either a dye or a pigment. The ink droplet ejection sequence of color inks may be either ascending order or descending order of brightness of color, and the sequence may be determined in consideration of favorable image recording quality.

When overlaying from the color having a higher value of the brightness of color, the active energy ray is likely to reach the lower ink easily, and it is effective to prevent interference of curing sensitivity, increase of residual monomer, occurrence of odor, and deterioration of adhesion. All colors may be ejected and then exposed at once, but exposure of one color each is preferred for promoting the curing property.

The image signal to be recorded is preferred to be processed so as to obtain a favorable color reproduction as disclosed in JP-A No. 6-210905.

### Recording material

The recording medium to be recorded by using the ink composition of the invention may be an ink permeable recording medium or an ink impermeable recording medium.

Examples of the ink permeable recording medium include plain paper, inkjet paper, coated paper, electrophotographic paper, cloth, nonwoven cloth, porous membrane, and polymer absorber. Such examples are mentioned as recording materials in, for example, JP-A No. 2001-1891549.

Examples of the ink impermeable recording medium include art paper, synthetic resin, rubber, resin coated paper, glass, metal, ceramics, and wood. Further, to add various functions, a plurality of these materials may be combined and compounded and used as a base material.

Any synthetic resin may be used, and examples thereof include polyesters such as polyethylene terephthalate, and polybutadiene terephthalate; polyolefins such as polyvinyl chloride, polystyrene, polyethylene, polyurethane, and polypropylene; and acrylic resin, polycarbonate, and acrylonitrile-butadiene-styerne copolymer, diacetate, triacetate, polyimide, cellophane, and celluloid.

The shape (thickness) of the base material made of such synthetic resin may be a film, a card, or a block, and is not particularly specified, and any shape may be selected according to the purpose. These synthetic resins may be either transparent or opaque. As a form of use of synthetic resins, for example, it is preferred to be used as a film as used in soft packages, and various non-absorbing plastics and films may be used. Examples of plastic films include PET film, OPS film, OPP film, ONy film, PVC film, PE film, and TAC film.

Examples of the resin coated paper include a transparent polyester film, an opaque polyester film, an opaque polyolefin resin film, and a paper support member having both sides of paper laminated with polyolefin resin, and in particular the paper support member having both sides of paper laminated with polyolefin resin is preferred.

As described herein, by image recording using the ink composition of the invention, it is possible to obtain an image of high sensitivity and excellent in curing property, and it is also possible to obtain a recorded material, i.e., the recorded material of the invention, which is excellent in curing property and may exhibit sufficient scratch resistance.

All publications, patent applications, and technical standards mentioned in this specification are herein incorporated by reference to the same extent as if each individual publication, patent application, or technical standard was specifically and individually indicated to be incorporated by reference.

### EXAMPLES

The invention is described while referring to examples, but the invention is not limited to these examples alone. In these examples, the ink for inkjet recording is used as an example of the ink composition.

### <Preparation of magenta pigment dispersion liquids 1 to 4>

Pigments, polymerizable compounds, and dispersants shown in Table 1 were premixed for 60 minutes. By using an ULTRA-APEX MILL UAM-015 (manufactured by KOTOBUKI INDUSTRIES CO., LTD.) and adding zirconia beads having a diameter specified in Table 1 at a filling rate of 70%, the mixture was dispersed for 90 minutes at a peripheral speed of 10 m/sec, and thus the magenta pigment dispersion liquid was obtained. The liquid temperature in dispersion operation was 35 to 37°C.

The average particle size of the pigment dispersion liquid was determined by measuring the diameter of major axis of 100 pigment particles by using a transmission electron microscope (TEM), and calculating the number-average. Results are shown in Table 1.

### <Preparation of magenta pigment dispersion liquid 5>

Pigment, polymerizable compound, and dispersant shown in magenta pigment dispersion liquid 2 in Table 1 were premixed for 60 minutes. By using an ULTRA-APEX MILL UAM-015 (manufactured by KOTOBUKI INDUSTRIES CO., LTD.) and adding zirconia beads having a diameter of 0.5 mm at a filling rate of 70%, the mixture was dispersed for 90 minutes at a peripheral speed of 10 m/sec, and thus the magenta pigment dispersion liquid was obtained. The liquid temperature in dispersion operation was 37 to 40°C. The average particle size of the pigment dispersion liquid was measured by using a transmission electron microscope (TEM), and the average particle size was 91 nm.

**Table 1**

| (part by mass) | | | | | | |
|---|---|---|---|---|---|---|
| | | Magenta pigment dispersion liquid | | | | |
| | | 1 | 2 | 3 | 4 | 5 |
| Diameter of zirconia beads (mm) | | 0.05 | 0.05 | 0.05 | 0.25 | 0.5 |
| Pigment | HOSTAPERM RED E5B02 (PV-19) (manufactured by Clariant) | 20 | 20 | 20 | 20 | 20 |
| | Average particle size of primary particles (nm) | 70 | 70 | 70 | 70 | 70 |
| Polymerizable compound | ALONOXETHANE OXT-221 (manufactured by Toagosei Co., Ltd.) | 74 | 74 | 74 | 74 | 74 |
| Dispersant | Polymer 1 described below | 6 | - | - | 6 | - |
| | Polymer 2 described below | - | 6 | - | - | 6 |
| | SOLSPERSE 32000 (manufactured by Lubrizol) | - | - | 6 | - | - |
| Dispersion liquid | Average particle size (nm) | 70 | 71 | 75 | 79 | 91 |
| | | Invention | Invention | Invention | Invention | Comparative |

Polymers 1 and 2 and polymer 3 which will be described later were prepared as follows.

### (Synthesis of polymer 1)

9.76 parts of 9(10H)-acridone, and 5.61 parts of t-butoxy potassium were dissolved in 30 parts of dimethyl sulfoxide, and heated to 45°C. 15.2 parts of chloromethyl styrene was dropped therein, and then the mixture was heated and stirred at 50°C for 5 hours. The reaction liquid was poured in 200 parts of distilled water while stirred, and the obtained deposit was filtered and washed, and 11.9 parts of monomer 1 was obtained.

15 parts of methyl ethyl ketone was poured into three-opening flask purged with nitrogen, and stirred by a stirrer (Three-One Motor manufactured by SHINTO SCIENTIFIC CO., LTD.). While nitrogen was introduced into the flask, the mixture was heated to 78°C. A monomer solution and an initiator solution described below and prepared separately were dropped simultaneously in the mixture in 2 hours. After dropping, 0.08 parts of V-65 specified below was added, and the mixture was heated and stirred at 78°C for 3 hours. The obtained reaction liquid was poured into 1000 parts of hexane while stirred, the produced sediment was filtered, and heated and dried, and graft polymer 1 was obtained.

### (Monomer solution)

- Monomer 1 3.0 parts
- Polymethyl methacrylate having a methacryloyl group at a terminal
   (number-average molecular weight 6000, AA-6, manufactured by TOAGOSEI CO., LTD.) 21.0 parts
- 3-(N,N-dimethylaminopropyl acrylamide) 6.0 parts
- Methyl ethyl ketone 45 parts (Initiator solution)
- 2,2-azobis (2,4-dimethyl valeronitrile) (V-65, manufactured by Wako Pure Chemical Industries, Ltd.) 0.04 parts
- Methyl ethyl ketone 9.6 parts

### (Synthesis of polymer 2)

Graft polymer 2 was obtained in the same procedure as in synthesis of polymer 1, except that the polymethyl methacrylate having a methacryloyl group at a terminal used in synthesis of polymer 1 was changed to methoxy polyethylene glycol methacrylate (NK ESTER-230G, manufactured by Shin-nakamura Chemical Corporation).

### (Synthesis of polymer 3)

9.56 parts of N-(2-hydroxyethyl) phthalimide, 5.16 parts of triethylamine, and 50 parts of ethyl acetate were dissolved, and heated to 40°C. 7.76 parts of 2-methacryloyl oxyethyl isocyanate (KARENZ MOI, manufactured by Showa Denko K. K.) was gradually dropped. The mixture was heated and stirred for 7 hours at 45°C. The obtained reaction liquid was extracted by ethyl acetate, washed with water, and washed saturated brine, and dried and concentrated, and 15.1 parts of monomer 2 was obtained.

Graft polymer 3 was obtained in the same procedure as in synthesis of polymer 1, except that monomer 1 used in synthesis of polymer 1 was changed to monomer 2.

### <Preparation of cyan pigment dispersion liquids 1 to 2>

Pigments, polymerizable compounds, and dispersant shown in Table 2 were premixed for 60 minutes. By using an ULTRA-APEX MILL UAM-015 (manufactured by KOTOBUKI INDUSTRIES CO., LTD.), and adding zirconia beads having a diameter of 0.03 mm at a filling rate of 70%, the mixture was dispersed for 120 minutes at a peripheral speed of 12 m/sec, and thus the cyan pigment dispersion liquid was obtained. The liquid temperature in dispersion operation was 38 to 41°C.

The average particle size of the pigment dispersion liquid was measured by using a transmission electron microscope (TEM). Results are shown in Table 2.

### <Preparation of cyan pigment dispersion liquid 3>

Pigment, polymerizable compound, and dispersant shown in cyan pigment dispersion liquid 2 in Table 2 were premixed for 60 minutes. By using an ULTRA-APEX MILL UAM-015 (manufactured by KOTOBUKI INDUSTRIES CO., LTD.), and adding zirconia beads having a diameter of 0.5 mm at a filling rate of 70%, the mixture was dispersed for 90 minutes at a peripheral speed of 10 m/sec, and thus the magenta pigment dispersion liquid was obtained. The liquid temperature in dispersion operation was 37 to 40°C.

The average particle size of the pigment dispersion liquid was measured by using a transmission electron microscope (TEM), and the average particle size was 102 nm.

**Table 2**

| (part by mass) | | | | |
|---|---|---|---|---|
| | | Cyan pigment dispersion liquid | | |
| | | 1 | 2 | 3 |
| Diameter of zirconia beads (mm) | | 0.03 | 0.03 | 0.5 |
| Pigment | IRGALITE BLUE GLVO (PB-15.4, manufactured by Ciba Specially Chemicals, Ltd.) | 20 | 20 | 20 |
| | Average particle size of primary particles (nm) | 80 | 80 | 80 |
| Polymerizable compound | ALONOXETHANE OXT-221 (manufactured by Toagosei) | 73 | 73 | 73 |
| Dispersant | Polymer 3 described above | 7 | - | - |
| | SOLSPERSE 28000 (manufactured by Lubrizol) | - | 7 | 7 |
| Dispersion liquid | Average particle size (nm) | 80 | 83 | 102 |
| | | Invention | Invention | Comparative |

### <Preparation of ink composition>

### [Example I-1]

The following components were stirred and mixed, and a magenta ink composition was obtained.

### <Ink composition components>

- Monomer: (3',4'-epoxy cyclohexane) methyl-3,4-epoxy cyclohexane carboxylate (CELLOXIDE 2021A, manufactured by DAICEL-CYTEC Company LTD.), 30 g
- Monomer: bis [1-ethyl (3-oxetanyl)] methyl ether (ALONOXETHANE OXT-221, manufactured by TOAGOSEI CO., LTD.) 70 g
- Magenta pigment dispersion liquid 1, 25 g
- Photopolymerization initiator: sulfonium salt (UVI-6992, manufactured by Dow Chemicals) 9.0 g
- Sensitizer: 9,10-dibutoxy anthracene 3.0 g
- Surface active agent: Byk 307, manufactured by Byk Chemie) 0.07 g

### [Examples I-2 to 4, comparative example I-1]

The ink compositions of the invention and the comparative example were obtained in the same procedure as in example I-1, except that magenta pigment dispersion liquids 2 to 4 and 5 were used instead of magenta pigment dispersion liquid 1 used in example I-1 respectively.

### [Example II-1]

The following components were stirred and mixed, and a cyan ink composition was obtained.

### <Ink composition components>

- Monomer: CELLOXIDE 3000 (manufactured by DAICEL-CYTEC Company LTD.) 60 g
- Monomer: bis [1-ethyl (3-oxetanyl)] methyl ether (ALONOXETHANE OXT-221, manufactured by TOAGOSEI CO., LTD.) 30 g
- Monomer: 3-ethyl-3-hydroxymethyl oxethane (ALONOXETHANE OXT-101, manufactured by TOAGOSEI CO., LTD.) 10 g
- Cyan pigment dispersion liquid 1 10 g
- Photopolymerization initiator: sulfonium salt (SP-172, manufactured by ADEKA Corp.) 6.0 g
- Sensitizer: 9,10-dibutoxy anthracene 2.0 g
- Surface active agent: MEGAFACE F476 (manufactured by Dainippon Ink and Chemicals, Inc.) 0.2 g

### [Example II-2, comparative example II-1]

The ink compositions of the invention and the comparative example were obtained in the same procedure as in example II-1, except that cyan pigment dispersion liquids 2 and 3 were used instead of cyan pigment dispersion liquid 1 used in example II-1 respectively.

### [Evaluation]

### <Filtering test>

10 mL of each of the ink compositions obtained in the examples and comparative examples was filtered by a membrane filter of 5.0 µm under reduced pressure of 600 mbar, and the required filtering time (sec) was measured. Filtering performance was tested in products stored at room temperature, and controlled temperature (45°C, 2 weeks).

### <Printing and exposure test>

Droplets of the ink compositions (stored at room temperature) obtained in examples and comparative examples were ejected by using a piezo head. The head has 318 nozzles at nozzle density of 150 per 25.4 mm, and the nozzles are fixed at deviation of 1/2 of nozzle interval in the direction of column of 2 nozzles, and 300 droplets are applied per 25.4 mm in the nozzle array direction on the media.

The temperature of the head and ink near the ejection area is controlled at 50 ± 0.5°C near the ejection area by circulation of warm water in the head.

Ink ejection from the head is controlled by piezo drive signals applied to the head, and the ink is ejected by 6 to 42 dpi per droplet In the examples the ink is ejected from the head the head while the medium is conveyed at a position of 1 mm beneath the head.

The conveying speed is variable within 50 to 200 mm/s. Piezo driving frequency can be set at 4.6 kHz at maximum, and by setting these conditions, the dropping amount can be controlled. In the examples, by setting the conveying speed at 90 mm/s and driving frequency at 1.9 kHz, the ink ejection amount was controlled, thereby ejecting ink droplets at 10 g/m².

The medium onto which the ink droplets have been ejected is conveyed to the exposure unit, and exposed by ultraviolet light emitting diode (UV-LED). As the UV-LED, NCCU033 manufactured by Nichia Corp. was used in the examples. This LED is capable of emitting ultraviolet ray at wavelength of 365 nm from one chip. By applying a current of about 500 mA is, light of about 100 mW is emitted from the chip. By disposing a plurality of chips at interval of 7 mm, power of 0.3 W/cm² is obtained on the surface of the medium. The time until exposure after ink droplet ejecting, and the exposure duration can be adjusted by the conveying speed of medium and distance of the head and the LED in conveying direction. In the examples, exposure was carried out after about 0.5 second of ink depositing on the medium.

Depending on the setting of the distance to the medium and the conveying speed, the exposure energy on the medium can be varied within a range from 0.01 to 15 J/cm². In the examples, the exposure energy was adjusted to 100 mJ/cm² by controlling the conveying speed.

The exposure power and exposure energy were measured by a spectroradiometer URS-40D manufactured by USHIO INC., and the value obtained by integrating the wavelength of 220 nm to 400 nm was used.

In the examples, as the medium, TAC film of thickness of 100 µm was used. Printing and exposure tests were conducted in the environment of 23°C and R.H. of 60%.

### <Evaluation of ejection>

Printing as described above was carried out continuously for 60 minutes, and the ejection was evaluated according to the following criterion 60 minutes later.
A: normal ejection from all nozzles.
B: some nozzles were clogged and failed to eject.
C: almost no ejection.

### <Evaluation of haze>

The haze of the obtained printed and cured samples was measured by a haze meter (HGM-2DP, manufactured by SUGA TEST INSTRUMENTS CO., LTD.)

**Table 3**

| <Magenta ink> | | | | | |
|---|---|---|---|---|---|
| Ink composition | Pigment dispersion liquid | Filtering (room temperature) (sec) | Filtering (controlled temperature) (sec) | Ejection | Haze |
| Example I-1 | Magenta pigment dispersion liquid 1 | 14 | 17 | A | 6.10% |
| Example I-2 | Magenta pigment dispersion liquid 2 | 15 | 19 | A | 6.30% |
| Example I-3 | Magenta pigment dispersion liquid 3 | 15 | 44 | A | 6.30% |
| Example I-4 | Magenta pigment dispersion liquid 4 | 18 | 22 | A | 7.20% |
| Comparative Example I-1 | Magenta pigment dispersion liquid 5 | 46 | Unable to filter | B | 10.50% |

**Table 4**

| <Cyan ink> | | | | | |
|---|---|---|---|---|---|
| Ink composition | Pigment dispersion liquid | Filtering (room temperature) (sec) | Filtering (controlled temperature) (sec) | Ejection | Haze |
| Example II-1 | Cyan pigment dispersion liquid I | 7 | 8 | A | 3.80% |
| Example II-2 | Cyan pigment dispersion liquid 2 | 8 | 12 | A | 4.00% |
| Comparative Example II-1 | Cyan pigment dispersion liquid 3 | 28 | Unable to filter | B | 8.40% |

As shown in Tables 3 and 4, the ink compositions obtained by using the pigment dispersion liquids of the invention were excellent in filtering performance and ejection stability, and the transparency of printed materials was superior.

## Claims

1. A manufacturing method for a nonaqueous pigment dispersion liquid, the nonaqueous pigment dispersion liquid containing at least a pigment, a dispersant, and a polymerizable compound, the method comprising finely dispersing the nonaqueous pigment dispersion liquid using beads having a diameter of from 0.01 mm to less than 0.3 mm, wherein the dispersant is a polymer containing a repeating unit selected from the following units:

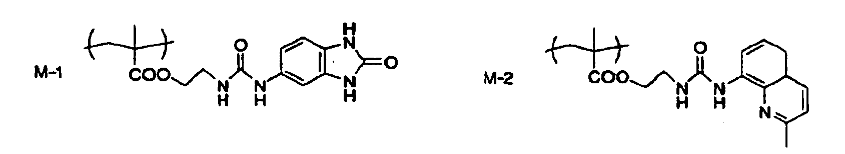

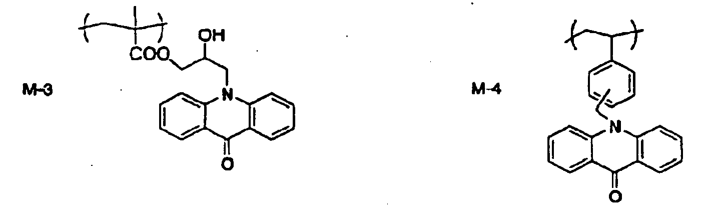

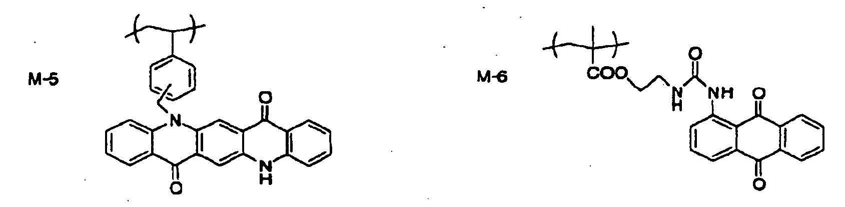

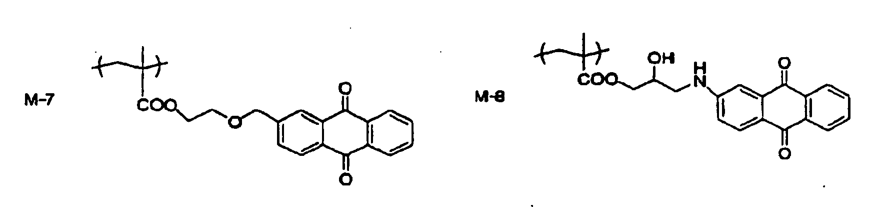

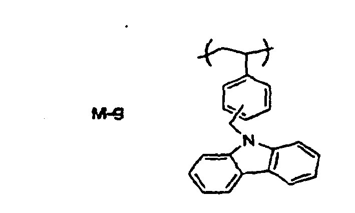

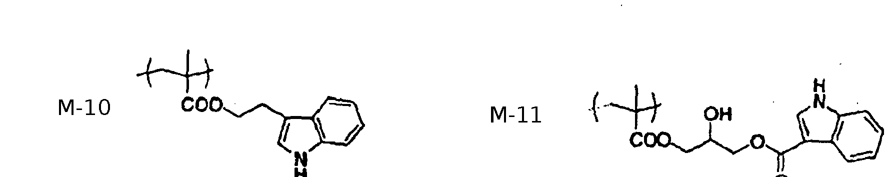

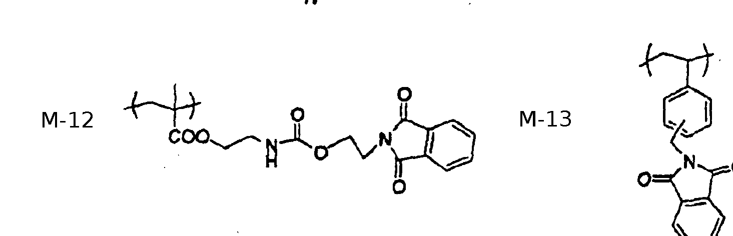

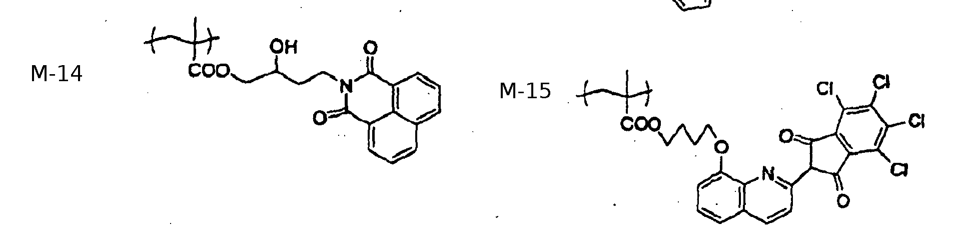

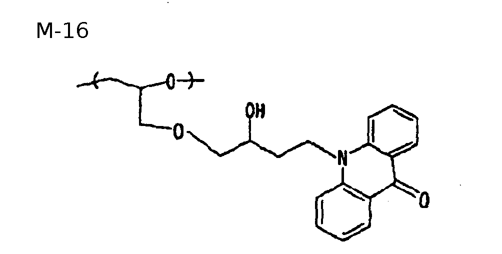

2. The manufacturing method for a nonaqueous pigment dispersion liquid of claim 1, wherein the polymerizable compound contains at least one of a monofunctional (meth)acrylate and a difunctional (meth)acrylate.

3. The manufacturing method for a nonaqueous pigment dispersion liquid of claim 1 or 2, wherein the polymerizable compound contains at least one of a compound containing an oxethane group and a compound containing an oxirane group.

4. An ink composition comprising a nonaqueous pigment dispersion liquid manufactured by the manufacturing method of any one of claims 1 to 3, a polymerizable compound, and a photopolymerization initiator.

5. An inkjet recording composition comprising the ink composition of claim 4.

6. An image forming method comprising forming an image by inkjet recording, the inkjet recording comprising ejecting the ink composition of claim 4 or the inkjet recording composition of claim 5.

7. An image forming method comprising:
forming an image on a recording material using the ink composition of claim 4 or the inkjet recording composition of claim 5, and
curing the image formed on the recording material by irradiation with an active energy ray.

8. A record material obtained by forming an image using the ink composition of claim 4 or the inkjet recording composition of claim 5.

## Patentansprüche

1. Herstellungsverfahren für eine nicht-wässrige Pigmentdispersionslösung, wobei die nicht-wässrige Pigmentdispersionslösung zumindest ein Pigment, ein Dispergiermittel und eine polymerisierbare Verbindung umfasst, wobei das Verfahren das feine Dispergieren der nicht-wässrigen Pigmentdispersionslösung unter Verwendung von Kugeln mit einem Durchmesser von 0,01 mm bis weniger als 0,3 mm umfasst, worin das Dispergiermittel ein Polymer ist, umfassend eine Wiederholungseinheit ausgewählt aus den folgenden Einheiten:

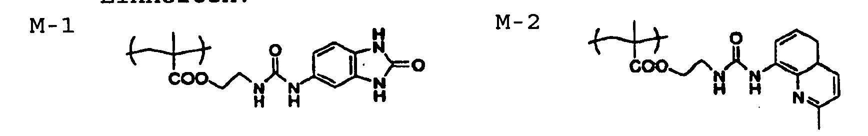

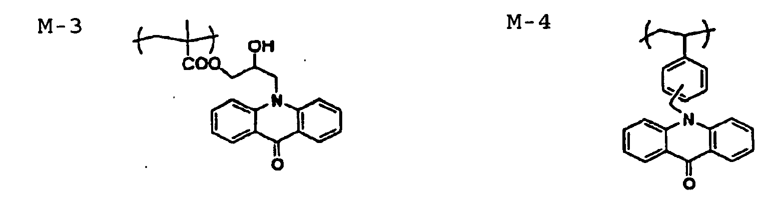

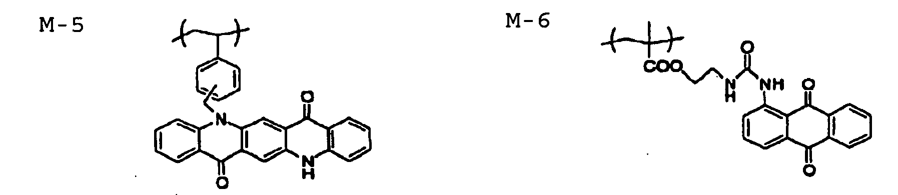

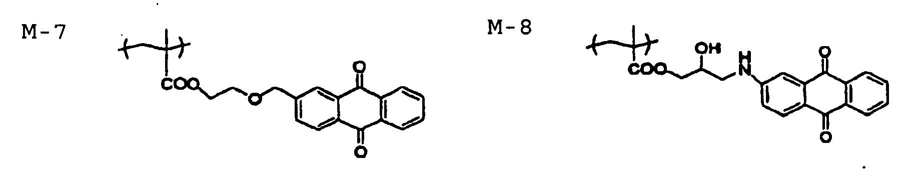

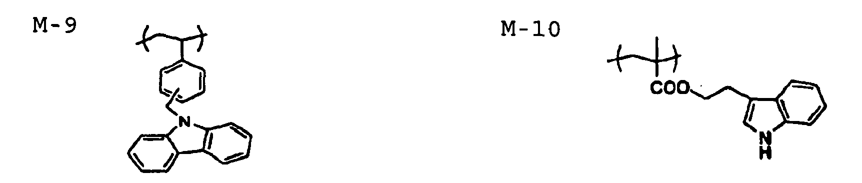

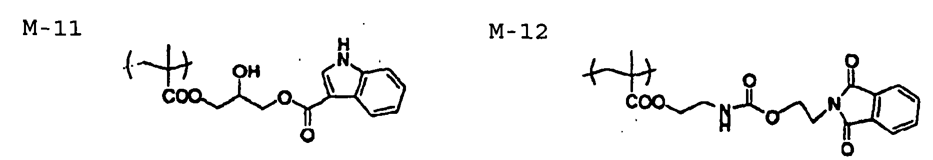

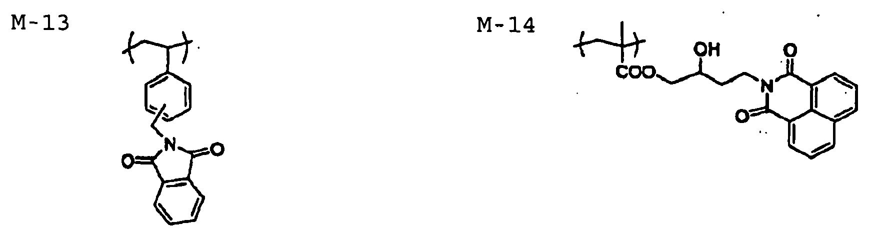

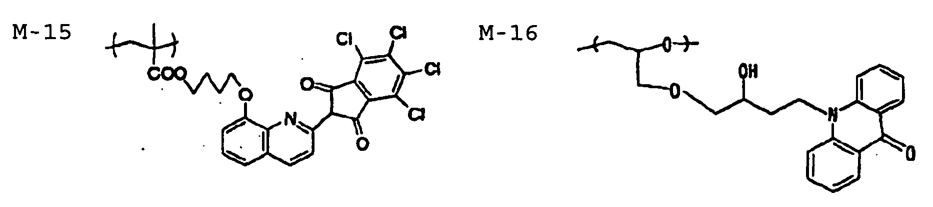

2. Herstellungsverfahren für eine nicht-wässrige Pigmentdispersionslösung nach Anspruch 1, worin die polymerisierbare Verbindung zumindest eines von einem monofunktionellen (Meth)acrylat und einem bifunktionellen (Meth)acrylat umfasst.

3. Herstellungsverfahren für eine nicht-wässrige Pigmentdispersionslösung nach Anspruch 1 oder 2, worin die polymerisierbare Verbindung zumindest eine von einer Verbindung mit einer Oxethangruppe und einer Verbindung mit einer Oxirangruppe umfasst.

4. Tintenzusammensetzung, umfassend eine nicht-wässrige Pigmentdispersionslösung, hergestellt durch das Herstellungsverfahren nach einem der Ansprüche 1 bis 3, eine polymerisierbare Verbindung und einen Photopolymerisationsinitiator.

5. Tintenstrahlaufzeichnungszusammensetzung, umfassend die Tintenzusammensetzung nach Anspruch 4.

6. Bildgebungsverfahren, umfassend das Bilden eines Bildes durch Tintenstrahlaufzeichnung, wobei die Tintenstrahlaufzeichnung das Ejizieren der Tintenzusammensetzung nach Anspruch 4 oder der Tintenstrahlaufzeichnungszusammensetzung nach Anspruch 5 umfasst.

7. Bildgebungsverfahren, umfassend:
Bilden eines Bildes auf einem Aufzeichnungsmaterial unter Verwendung der Tintenzusammensetzung nach Anspruch 4 oder der Tintenstrahlaufzeichnungszusammensetzung nach Anspruch 5 und
Härten des Bildes, das auf dem Aufzeichnungsmaterial gebildet ist, durch Bestrahlen mit aktiver Energiestrahlung.

8. Aufzeichnungsmaterial, erhalten durch Bilden eines Bildes unter Verwendung der Tintenzusammensetzung nach Anspruch 4 oder Tintenstrahlaufzeichnungszusammensetzung nach Anspruch 5.

## Revendications

1. Procédé de fabrication pour un liquide de dispersion de pigment non aqueux, le liquide de dispersion de pigment non aqueux contenant au moins un pigment, un dispersant, et un composé polymérisable, le procédé comprenant la mise en dispersion fine du liquide de dispersion de pigment non aqueux en utilisant des billes ayant un diamètre compris entre 0,01 mm et moins de 0,3 mm, dans lequel le dispersant est un polymère contenant une unité répétitive sélectionnée parmi les unités suivantes :

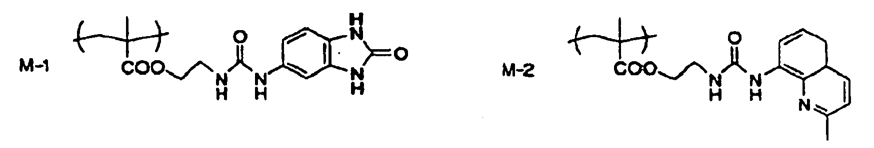

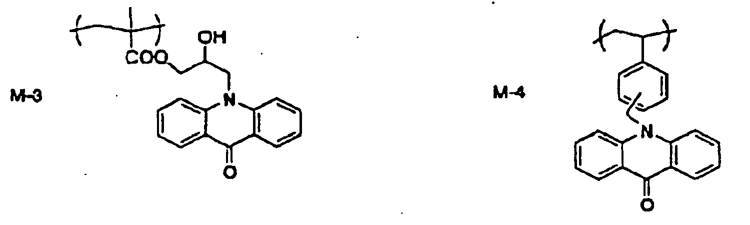

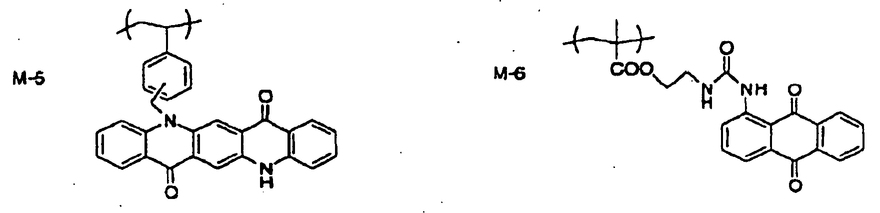

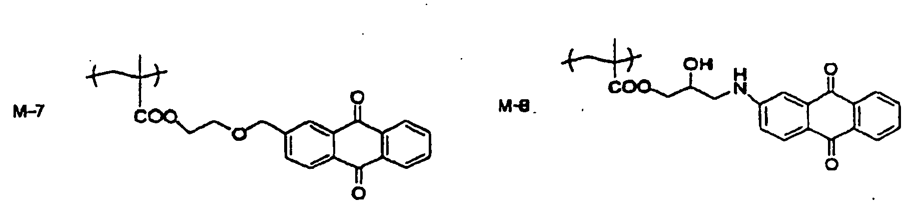

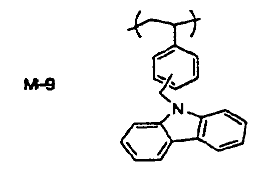

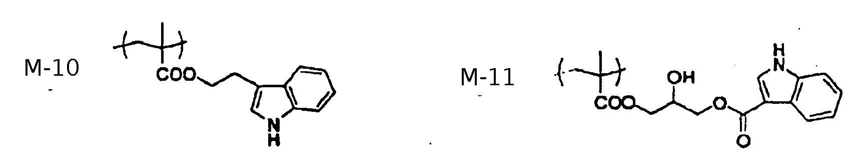

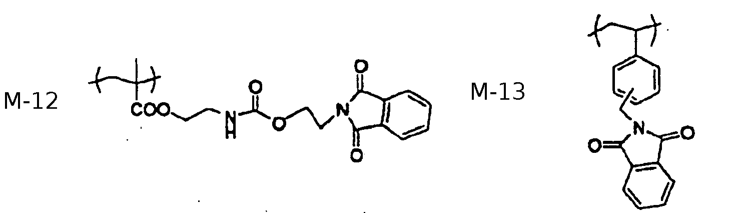

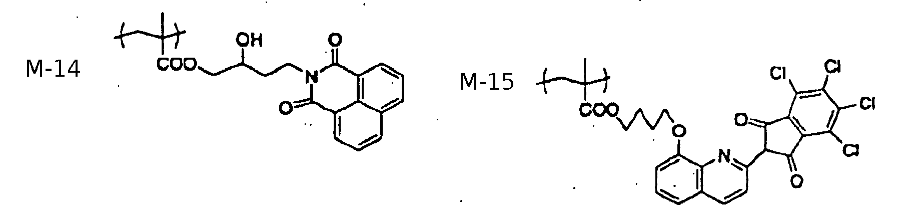

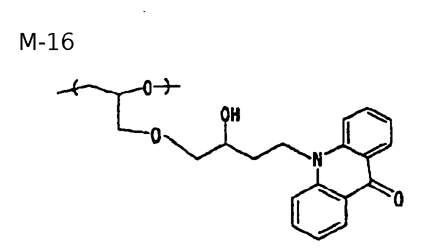

2. Procédé de fabrication pour un liquide de dispersion de pigment non aqueux selon la revendication 1, dans lequel le composé polymérisable contient au moins l'un parmi un (méth)acrylate monofonctionnel et un (méth)acrylate bifonctionnel.

3. Procédé de fabrication pour un liquide de dispersion de pigment non aqueux selon la revendication 1 ou 2, dans lequel le composé polymérisable contient au moins l'un parmi un composé contenant un groupe oxéthane et un composé contenant un groupe oxirane.

4. Composition d'encre comprenant un liquide de dispersion de pigment non aqueux fabriqué par le procédé de fabrication selon l'une quelconque des revendications 1 à 3, un composé polymérisable, et un initiateur de photopolymérisation.

5. Composition pour enregistrement à jet d'encre comprenant la composition d'encre selon la revendication 4.

6. Procédé de formation d'image comprenant la formation d'une image par enregistrement à jet d'encre, l'enregistrement à jet d'encre comprenant l'éjection de la composition d'encre selon la revendication 4 ou la composition pour enregistrement à jet d'encre selon la revendication 5.

7. Procédé de formation d'image comprenant :
la formation d'une image sur un matériau d'enregistrement en utilisant la composition d'encre selon la revendication 4 ou la composition pour enregistrement à jet d'encre selon la revendication 5, et
le durcissement de l'image formée sur le matériau d'enregistrement par irradiation avec un rayonnement d'énergie active.

8. Matériau d'enregistrement obtenu en formant une image en utilisant la composition d'encre selon la revendication 4 ou la composition pour enregistrement à jet d'encre selon la revendication 5.
